# EUROPEAN PATENT APPLICATION

(11) **EP 3 584 911 A1**
(43) Date of publication of application: **25.12.2019**
(21) Application number: 18754570.2
(22) Date of filing: 26.01.2018
(51) Int. Cl.: H02K 11/25, H02K 3/04, H02K 3/18

(54) **ELECTRIC MOTOR AND ELECTRIC MOTOR MANUFACTURING METHOD**

(30) Priority: 20.02.2017 JP 2017028569; 02.05.2017 JP 2017091498
(71) Applicant: Panasonic Intellectual Property Management Co., Ltd., Osaka-shi, Osaka 540-6207 (JP)
(72) Inventor: YAMAGATA, Yoshikazu, Osaka-shi, Osaka 540-6207 (JP); WATANABE, Akihiko, Osaka-shi, Osaka 540-6207 (JP); AMAYA, Takanori, Osaka-shi, Osaka 540-6207 (JP); OZAKI, Ikuo, Osaka-shi, Osaka 540-6207 (JP)
(74) Representative: SSM Sandmair
(86) International application number: PCT/JP2018/002393
(87) International publication number: WO 2018/150845

(57) **Abstract**

An electric motor includes: a stator that has a stator core and has coils that are formed of an electric wire wound on the stator core and form a plurality of phases; a resin covering the stator; and a wire break facilitator that facilitates the electric wire to break at a time of abnormality. In the electric motor having the stator in which the coils are covered with molding resin, the wire break facilitator is attached to at least one of: a transition wire part between the coils wound on the stator core; a connection part at a neutral point; and a connection part of a lead wire.

## Description

### TECHNICAL FIELD

The present invention relates to an electric motor in which a stator is covered with molding resin (so-called a molded motor), and to an electric motor manufacturing method.

### BACKGROUND ART

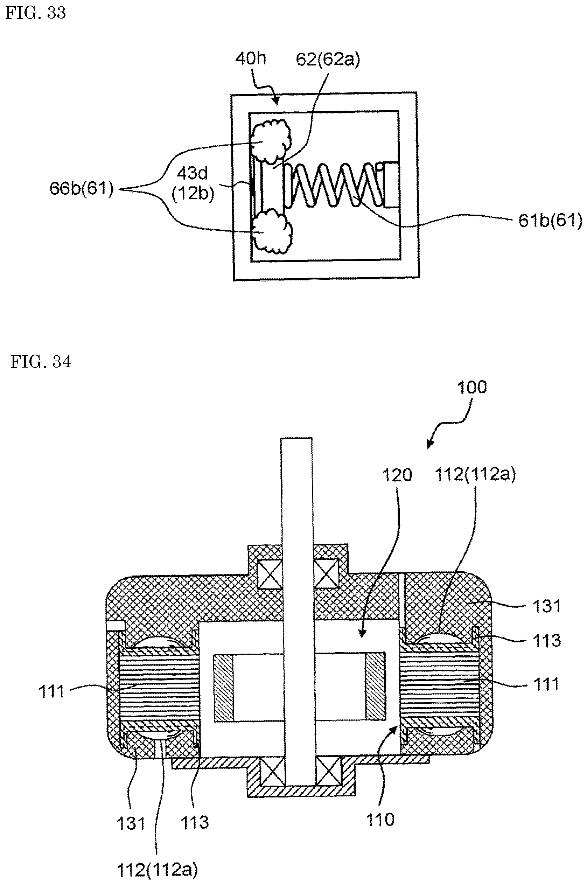

FIG. 34 is a front cross-sectional view of a conventional electric motor. As shown in FIG. 34, in electric motor 100 including rotor 120 and stator 110, stator 110 is covered with molding resin 131. Electric motor 100 is also called as a molded motor and is already widely known (for example, see PTL 1 and the like).

Stator 110 includes: stator core 111 formed of a plurality of laminated metal sheets; and coils (winding wire) 112 wound on stator core 111. Coils 112 of stator 110 are covered with molding resin 131. In particular, a part of each coil 112 protruding from stator core 111 is also called coil end 112a. In order to electrically insulate between coils 112 and stator core 111, insulators 113 are attached between coils 112 and stator core 111.

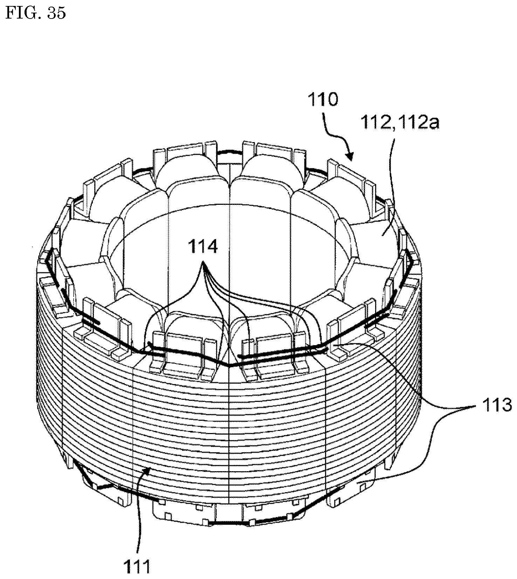

FIG. 35 is a perspective view of a stator of a conventional electric motor before the stator is resin-molded. Stator core 111 shown in FIG. 35 has 12 teeth. On each of the teeth, an electric wire is wound. Thus, there are 12 coils 112 in FIG. 35. When stator 110 is used for, for example, a three-phase electric motor having U-phase, V-phase, and W-phase, each phase covers four coils 112. Coils 112 constituting each phase are connected to each other with transition wires 114 that are wound on an outer peripheral part of insulator 113 in contact with coil ends 112a.

Further, the three phases are connected to each other at a neutral point. Further, to coils 112 constituting each phase there are connected lead wires, and the lead wires are connected to outside of the electric motor. Coils 112 constituting the phases are supplied with electric power from outside of the electric motor through these lead wires.

If an excessive current flows through coil 112, coil 112 generates heat and heats up to an extremely high temperature, and a layer short can occur between electric wires constituting coil 112. Outer peripheries of conductors of coils 112 are covered with insulating material. There is a possibility that for some reason such as the insulation being melted due to heat, a short circuit occurs between coils whose outer peripheries are insulated with insulation. For example, if a layer short has occurred in coil 112 under an unusual environment where no safety protection device cannot work at all, a spark sometimes occurs inside the electric motor. When a spark due to a layer short has occurred, a gas may be generated due to insulator 113 or the like being heated by the spark, and the gas can catch fire and can ignite.

In a measure to prevent electric motor 100 from igniting as described above, a current supplied to electric motor 100 is shut off. In general, as a way to shut off the current supplied to electric motor 100, a temperature fuse or a current fuse is provided in a circuit of electric motor 100.

Further, other ways are proposed. In one way, a recess is provided to locally reduce a cross-sectional area of a lead wire or a brush lead wire of an electric motor (see PTL 2), and in another way, cross-sectional areas of field coils are reduced for 1/2 or more of overall lengths (see PTL 3).

However, in order to improve tolerance of a device equipped with an electric motor, the electric motor, which is a constituent element of the device, needs to be safer. Specifically, there is a problem that if a layer short occurs in a coil under the above-mentioned unusual environment, fire can leak toward the outside of the electric motor from the electric motor.

In addition, in the way described in PTL 2, in which the recess is formed in the electric motor lead wire or the brush lead wire to locally reduce the cross-sectional area, a circuit resistance is accordingly increased. For this reason, the output is reduced, and characteristics of the electric motor are accordingly deteriorated in some cases. If a part whose cross-sectional area is locally reduced is molded with resin or other materials, it is difficult for that part to melt and break. Alternatively, even if that part has melted and broken, the electric wires having melted and broken may come into contact with each other again, or resin carbonized by heat at the time of the melting, and breaking may function as a conductive member; therefore, there is a high possibility that the current cannot be sufficiently shot off.

In the way described in PTL 3, the cross-sectional areas of the field coils are reduced for 1/2 or more of the overall lengths; however, a layer short can be caused in the field coil at a high possibility, and it can be considered that a current cannot be shut off sufficiently by the electric wire having melted and broken. Further, in a case where there are both of a coil part having a normal cross-sectional area and a coil part having a reduced cross-sectional area, there is a need for a construction method to connect the two parts, and a working time is increased by time required to perform the method.

### Citation List

### Patent Literature

PTL 1: International Patent Publication No. WO 2012/101976
PTL 2: Unexamined Japanese Patent Publication No. H10-66311
PTL 3: Japanese Patent No. 4075750

### SUMMARY OF THE INVENTION

The present invention is to solve the above problems, and an object is to provide an electric motor in which even if any one of safety protection circuits for preventing an excessive current from flowing through a coil of a stator does not function and an excessive current flows through the coils of the stator, fire and smoke can be prevented from coming outside the electric motor.

In order to achieve the above object, an electric motor of the present invention includes: a stator; resin covering the stator; and a wire break facilitator that facilitate an electric wire to break. The stator includes: a stator core; and coils that are configured with an electric wire wound on the stator core and constitute a plurality of phases. The wire break facilitator is attached to at least any one of: transition wire parts provided between the coils wound on the stator core; a connection part at a neutral point of the plurality of phases constituted by the coils; and connection parts between the electric wire and lead wires for supplying, from outside, electric power to the electric wire.

With this configuration, even if by any chance, a common conventional safety protection circuit does not normally function and an excessive current flows through the coils of the stator, a temperature rises most quickly at any one of the following parts where the wire break facilitator is attached: the transition wire parts between the coils; the connection part at the neutral point between the coils; and the connection parts between the electric wire and the lead wires. Therefore, the electric wire at the part to which the wire break facilitator is attached melts and breaks, and power supply to the electric motor is thus shut off. As a result, the electric motor can be prevented from igniting.

Note that if the wire break facilitator is a space containing at least air, the wire break facilitator has a lower thermal conductivity than a molded part; therefore, the temperature can rise more quickly, and it is possible to reduce occurrence of re-energization and spark due to contact between the electric wires having melted and broken.

Further, the wire break facilitator is formed of a member that melts into a liquid state or a member that melts into a gas at a temperature higher than the higher temperature of a molding temperature of the resin and the maximum achieving coil temperature when the electric motor is operating.

In particular, in consideration of safe operation, the temperature at which the member of the wire break facilitator melts into a liquid state or a gas is preferably 20°C or more higher than the higher temperature of the molding temperature of the resin and the maximum achieving coil temperature at the time of operation.

If the present configuration is employed, it is possible to increase a degree of freedom of movement of the electric wire in the wire break facilitator at temperatures equal to or higher than a predetermined temperature. Therefore, the electric wire can easily melt and break. In addition, it is possible to reduce occurrence of re-energization or spark due to contact between the electric wires having melted and broken.

In addition, a part, of the electric wire, located inside the wire break facilitator has a smaller cross-sectional area than a part, of the electric wire, located outside the wire break facilitator. If the present configuration is employed, it is possible to increase an electric resistance of the electric wire located inside the wire break facilitator and therefore to accelerate the temperature rise. Therefore, in the electric motor having the present configuration, when an excessive current flows through the coil of the stator, the electric wire located inside the wire break facilitator can be surely melted and broken more quickly.

Note that the cross-sectional area of the electric wire can be made small by stretching, twisting, or bending the electric wire. Alternatively, the cross-sectional area of the electric wire can be made small by deforming a part of the electric wire into a flattened shape or a recessed shape. The above processing methods and shapes are preferable, since if the above processing methods or shapes are employed, it is easy to make the cross-sectional area of the electric wire small.

In addition, the electric wire located inside the wire break facilitator is configured with an electric wire having a thinner wire diameter than the electric wire located outside the wire break facilitator. Specifically, the electric wire located inside the wire break facilitator has a thinner conductor diameter than the electric wire used for the coils. It is preferable to employ the present configuration since the present configuration makes it possible to reduce the cross-sectional area of the electric wire and to thus facilitate melting and breaking of the electric wire located inside the wire break facilitator.

Further, the wire break facilitator includes: a deforming unit that deforms the electric wire; and a holder. The holder holds the deforming unit and is formed of a member that melts into a liquid state or melts into a gas at a temperature higher than the higher temperature of the molding temperature of the resin and the maximum achieving coil temperature at the time of operation. The deforming unit of the wire break facilitator moves in a predetermined movable range when the holder has melted into a liquid state or a gas. The deformation of the electric wire includes deformation of the cross-sectional shape of the electric wire or cutting of the electric wire.

Alternatively, the wire break facilitator includes: a deforming unit that deforms the electric wire; and a holder. The holder holds the deforming unit and is formed of a shape-memory alloy whose shape changes at a temperature higher than the higher temperature of the molding temperature of the resin and the maximum achieving coil temperature at the time of operation. The deforming unit of the wire break facilitator moves in a predetermined movable range when a shape of the holder has changed.

In particular, the temperature at which the member of the wire break facilitator melts into a liquid state or a gas is preferably 20°C or more higher than the higher temperature of the molding temperature of the resin and the maximum achieving coil temperature at the time of operation.

If the present configuration is employed, it is not necessary to previously reduce the cross-sectional area of a part of the electric wire. Only when an excessive current has flown through the electric wire and the electric wire has been heated to an abnormally high temperature, it is possible to deform and cut the electric wire and to shut off the current. Therefore, it is possible to improve the safety without affecting inherent characteristics and reliability of the electric motor.

In addition, it is preferable to employ the above configurations since the configurations make it possible to perform control to shut off the energization at a predetermined temperature.

The present invention makes it possible to cause the temperature of the electric wire located inside the wire break facilitator to rise more quickly than the temperature of the electric wire located outside the wire break facilitator, or to increase the degree of freedom of movement of the electric wire located inside the wire break facilitator when, in a molded motor whose stator includes an electric wire covered with resin, an excessive current has flown and the electric wire has been heated to a high temperature. Therefore, the electric wire located inside the wire break facilitator can be easily melted and broken. As a result, it is possible to prevent the electric motor from igniting.

In addition, the wire break facilitator can reduce re-energization due to contact between the electric wires after melting and breaking or other troubles. Note that in the case where the inside of the wire break facilitator is filled with a gas, it is possible to reduce the possibility that resin carbonized by the heat at the time of melting and breaking functions as a conductive member and therefore the current cannot be shut off sufficiently.

Further, by reducing the cross-sectional area of the electric wire located inside the wire break facilitator, it is possible to accelerate the temperature rise of the electric wire. Therefore, it is possible to sufficiently deal with the excessive current even in the case where an electric wire having a large wire diameter is used. Further, the provided deforming unit can deform or cut the electric wire located inside the wire break facilitator while the temperature is rising. This arrangement does not affect the characteristics of the electric motor at all, and makes it possible to shut off the current in the electric wire located inside the wire break facilitator only at the time of abnormal temperature rise. As a result, it is possible to provide an electric motor having a higher reliability.

### BRIEF DESCRIPTION OF THE DRAWINGS

FIG. 1 is a front view of an electric motor according to a first exemplary embodiment of the present invention.
FIG. 2 is an exploded perspective view of the electric motor according to the first exemplary embodiment of the present invention.
FIG. 3 is a side surface cross-sectional view, in which the electric motor of the first exemplary embodiment of the present invention is partially enlarged.
FIG. 4 is a perspective view showing a stator of the electric motor according to the first exemplary embodiment of the present invention before the stator is resin-molded.
FIG. 5 is a front view of the stator shown in FIG. 4.
FIG. 6 is a main part explanatory diagram showing a wire break facilitator of the stator used for the electric motor according to the first exemplary embodiment of the present invention.
FIG. 7 is a schematic diagram illustrating how the electric motor according to the first exemplary embodiment of the present invention is used.
FIG. 8 is a main part enlarged view showing a stator of an electric motor according to a second exemplary embodiment of the present invention before the stator is resin-molded.
FIG. 9 is a plan view of the stator shown in FIG. 8.
FIG. 10 is a main part enlarged view showing a stator of an electric motor according to a third exemplary embodiment of the present invention before the stator is resin-molded.
FIG. 11 is a plan view of the stator shown in FIG. 10.
FIG. 12 is a main part enlarged view showing the stator of the electric motor according to the third exemplary embodiment of the present invention before the stator is resin-molded in a different manner.
FIG. 13 is a main part enlarged view showing a stator of an electric motor according to a fourth exemplary embodiment of the present invention before the stator is resin-molded.
FIG. 14 is a main part enlarged view of a transition wire located inside a wire break facilitator used in the electric motor according to the fourth exemplary embodiment of the present invention.
FIG. 15 is a cross-sectional view of the transition wire taken along line C-C in FIG. 14.
FIG. 16 is a main part enlarged view of another transition wire located inside the wire break facilitator used in the electric motor according to the fourth exemplary embodiment of the present invention.
FIG. 17 is a cross-sectional view of the transition wire taken along line D-D in FIG. 16.
FIG. 18 is a main part enlarged view showing a stator of an electric motor according to a fifth exemplary embodiment of the present invention before the stator is resin-molded.
FIG. 19 is a plan view of the stator shown in FIG. 18.
FIG. 20 is a main part enlarged view showing the stator of the electric motor according to the fifth exemplary embodiment of the present invention before the stator is resin-molded in a different manner.
FIG. 21 is a main part enlarged view showing a stator of an electric motor according to a sixth exemplary embodiment of the present invention before the stator is resin-molded.
FIG. 22 is a main part enlarged view showing the stator of the electric motor according to the sixth exemplary embodiment of the present invention before the stator is resin-molded in a different manner.
FIG. 23 is a perspective view showing a stator of an electric motor according to a seventh exemplary embodiment of the present invention before the stator is resin-molded.
FIG. 24 is an explanatory diagram of a holder included in a wire break facilitator used in the electric motor according to the seventh exemplary embodiment of the present invention before the holder operates.
FIG. 25 is an explanatory diagram of the holder included in the wire break facilitator used in the electric motor according to the seventh exemplary embodiment of the present invention after the holder operates.
FIG. 26 is a perspective view showing a stator of an electric motor according to an eighth exemplary embodiment of the present invention before the stator is resin-molded.
FIG. 27 is an explanatory diagram of a holder included in a wire break facilitator used in the electric motor according to the eighth exemplary embodiment of the present invention before the holder operates.
FIG. 28 is an explanatory diagram of the holder included in the wire break facilitator used in the electric motor according to the eighth exemplary embodiment of the present invention after the holder operates.
FIG. 29 is an explanatory diagram showing another stator of the electric motor according to the eighth exemplary embodiment of the present invention before the stator is resin-molded.
FIG. 30 is an explanatory diagram of a holder included in another wire break facilitator used in the electric motor according to the eighth exemplary embodiment of the present invention before the holder operates.
FIG. 31 is a perspective view of the holder included in the another wire break facilitator used in the electric motor according to the eighth exemplary embodiment of the present invention after the holder operates.
FIG. 32 is an explanatory diagram of a holder included in still another wire break facilitator used in the electric motor according to the eighth exemplary embodiment of the present invention before the holder operates.
FIG. 33 is an explanatory diagram of the holder included in the still another wire break facilitator used in the electric motor according to the eighth exemplary embodiment of the present invention after the holder operates.
FIG. 34 is a front sectional view of a conventional electric motor.
FIG. 35 is a perspective view of a stator of the conventional electric motor before the stator is resin-molded.

### DESCRIPTION OF EMBODIMENTS

An electric motor of the present invention is an electric motor having a stator in which a stator coil is molded with resin. A wire break facilitator is attached to at least one of transition wire parts between coils, a connection part at a neutral point, and connection parts between electric wire and lead wires.

The wire break facilitator is a structure that encloses a periphery of the electric wire with a member other than resin with which the stator is molded. The wire break facilitator is configured with such a member that when the wire break facilitator is heated to an abnormal temperature due to an excessive current flowing through the coils or other reasons, the member in the periphery of the electric wire becomes in a liquid state or a gaseous state at a predetermined temperature. As a matter of course, the member inside the wire break facilitator (inner member) may be in a gaseous state at temperatures less than or equal to the above temperature. In that case, the structure should be made to prevent the resin used to mold the stator from entering the wire break facilitator. In the following description, the time of abnormality means a state that an excessive current, in other words, a so-called overcurrent flows mainly through the electric wire constituting the coils. Alternatively, the time of abnormality includes a state that the electric wire heats to a high temperature as a result of a problem such as a layer short occurring in the electric wire constituting the coils.

In the above-mentioned structure, the electric wire is enclosed by a constructional material such as resin, metal, or ceramic that has heat resistance higher than the temperature at the time of molding, and molding resin cannot enter the structure. Examples of the present configuration include a structure in which the electric wire is enclosed by a member (enclosure member) having a cylindrical shape or a box shape and then electric wire introduction ports are blocked. Note that it is of course possible to make a part of an insulator in the above shape and to integrate the wire break facilitator and the insulator.

Examples of a material of the member for blocking the electric wire introduction ports include resin, rubber, and elastomer whose heat resistances are higher than the temperature at the time of molding. The material of the member for blocking the electric wire introduction ports only has to ensure airtightness enough to prevent the molding resin from entering the wire break facilitator. Note that examples of a material of the member for blocking the electric wire introduction ports include unsaturated polyester resin (Bulk Molding Compound, abbreviated as BMC), phenol resin, epoxy resin, and silicone resin, and it is of course possible to use the same material as the molding resin. In another structure, an enclosure member having excellent airtightness may be used to block the electric wire introduction ports.

The substance in the wire break facilitator (inner member) preferably is less inflammable and less explosive and has small thermal conduction so that the temperature of the electric wire can rise quickly. For this reason, air is the most preferable in terms of handling and safety. Alternatively, the substance in the wire break facilitator (inner member) can be a gelatinous substance that is less inflammable and less explosive.

In the case where the inside of the wire break facilitator is configured with a material that becomes in a liquid state or a gaseous state at a temperature higher than or equal to a predetermined temperature, the periphery of the electric wire may be enclosed with such a material, and the outside of the wire break facilitator may be molded with the resin used to mold the stator. Specifically, as the material, it is preferable to use a thermoplastic resin having a melting point at the predetermined temperature, and examples include nylon 6, polybutylene terephthalate, polyvinyl alcohol, polyvinyl chloride, polyvinylidene chloride, polyacetal, nylon 12, polymethyl methacrylate, polyethylene terephthalate, polyvinylidene fluoride, nylon 66, polyphenylene sulfide, polyetherimide, polysulfone, acetyl cellulose, and ethyl cellulose. Other than these materials, a material may be selected on the basis of the temperature at the time of molding, the temperature of the coils when the electric motor is used, and the like. Further, examples of a method for attaching the material to the electric wire include a method in which the material previously formed in a shape to nip the electric wire is attached, a method in which the material is directly attached to the electric wire, and other methods.

The material inside the wire break facilitator (inner member) may be a material other than a thermoplastic resin, and elastomer or other materials may be used, for example. Further, the inner member of the wire break facilitator may include a blowing agent that generates bubbles at a predetermined temperature to create a void or a gas.

As the electric wire used in the electric motor of the present invention, a commonly used electric wire can be used. Specifically, a preferable conductor material of the electric wire is copper, aluminum, a clad wire of copper and aluminum, or other materials in terms of conductivity, windability, and other properties. Note that in order to facilitate wire break at abnormal temperatures, the most preferable material is aluminum, which has a low melting point and can be easily deformed.

As an insulating film for the electric wire, a commonly used varnish can be used. Specifically, examples include vinyl chloride, polyethylene, polyester, polyurethane, polyamide, polyimide, polyesterimide, and polyamideimide. It is preferable to use a varnish of these materials, since if such a varnish is used, various features of conventional enameled wires can be provided, and specifications, properties, and reliability of the electric motor are thus obtained.

In addition, a cross-sectional area of at least a part of the electric wire located inside the wire break facilitator of the present invention can be locally reduced easily by stretching, twisting, or bending the electric wire. This process is preferable since only the part of the electric wire having a small cross-sectional area has a large electric resistance value, the temperature rise is accordingly large, and melting and breaking is therefore facilitated at that part. This local reduction in the cross-sectional area is small for the whole of the electric motor, and therefore does not affect the characteristics of the electric motor. As a result, it is possible to improve safety at the time of overcurrent. Note that a dimension of the part at which the cross-sectional area is reduced is preferably several mm to several cm. Further, a percentage of the reduction in the cross-sectional area can be appropriately selected, depending on the specifications of the electric motor (the supply current and the electric power in normal use, the wire diameter and the resistance of an electric wire conductor, and the like) and depending on a condition under which the electric wire should be melted and broken (the overcurrent value, the temperature, and the like). In this case, 40% to 90% of an initial state is preferable, and 50% to 80% of the initial state is most preferable.

Further, the wire break facilitator of the present invention may be formed of a thermosensitive conductive member that breaks at a temperature higher than the higher temperature of the molding temperature of the resin and the maximum achieving coil temperature when the electric motor is operating.

Alternatively, the wire break facilitator of the present invention may be configured to include a thermosensitive conductive member and an enclosure member. The thermosensitive conductive member breaks at a temperature higher than the higher temperature of the molding temperature of the resin and the maximum achieving coil temperature when the electric motor is operating. The enclosure member forms a space enclosing the thermosensitive conductive member in such a manner that the enclosure member contains air in the periphery of the thermosensitive conductive member.

In particular, as the thermosensitive conductive member, a resistor can be used that breaks at the above-mentioned temperature. Further, the temperature at which the member of the wire break facilitator melts into a liquid state or a gas is preferably 20°C or more higher than the higher temperature of the molding temperature of the resin and the maximum achieving coil temperature when the electric motor is operating.

Specific example of an element that can be used as the resistor include the following elements. A commonly used fixed resistor can be used as the resistor. Specifically, examples of the usable fixed resistor include: a carbon film fixed resistor, a metal film fixed resistor, a metal oxide film fixed resistor, and a wire wound fixed resistor.

In consideration of how the wire break facilitator is attached, a shape of the fixed resistor can be appropriately selected from a surface mount type, a lead type, and other types.

Note that there are following requirements on the resistor to be used. It is necessary to reduce affection of the resistor to be used to the characteristics or the reliability of the electric motor when the electric motor is being normally operated. On the other hand, the resistor to be used has to have a characteristic that the resistor breaks only when an overload current or the like flows through the electric motor and the temperature has thus reached the above-mentioned temperature. The characteristics of the resistor to be used such as a resistance value, a rated power, an allowable current, or the like are appropriately selected depending on the characteristics or the reliability required to the electric motor.

In this case, regarding the wire break facilitator, the wire break facilitator itself may be made of a thermosensitive conductive member. Alternatively, the wire break facilitator may be configured as mentioned above such that the enclosure member is used to constitute a structure that the molding resin does not enter and such that the thermosensitive conductive member is located inside the structure. In this case, since the enclosure member is used, dimensions of the wire break facilitator can be large in some cases. However, since air is contained between the enclosure member and the thermosensitive conductive member inside the wire break facilitator, heat insulating properties of the thermosensitive conductive member can be high. Accordingly, when the temperature of the electric motor rises due to an overcurrent or the like, the wire break facilitator can be facilitated to break, accordingly earlier. As a result, the current flowing through the electric motor can be shut off early.

Although the above description is given taking the resistor as an example of the thermosensitive conductive member, other components can be used as long as the same action and effect can be provided. For example, a jumper wire or a fuse can be used as the thermosensitive conductive member.

Alternatively, regarding the electric wire located inside the wire break facilitator, a cross-sectional shape of at least a part of the electric wire may be deformed in a flattened shape or a recessed shape so that the cross-sectional area is reduced. Note that a dimension of the part at which the cross-sectional area is reduced is preferably several mm to several cm similarly to the above description. A percentage of the reduction in the cross-sectional area can be appropriately selected, depending on the specifications of the electric motor or the condition under which the electric wire should be melted and broken. In this case, 40% to 90% of an initial state is preferable, and 50% to 80% is most preferable since this percentage easily enables balance between reliability and melting and breaking possibility at a high temperature of the electric motor.

Alternatively, it is possible to facilitate melting and breaking of the electric wire located inside the wire break facilitator by reducing the cross-sectional area of the electric wire by using, as the electric wire located inside the wire break facilitator, an electric wire having a thinner conductor diameter than the electric wire used for the coils.

Further, on at least a part of the electric wire located inside the wire break facilitator, there may be provided a jig or a tool that deforms or cuts the electric wire at a temperature higher than the higher temperature of the molding temperature of the resin and the maximum achieving coil temperature when the electric motor is operating.

In particular, the temperature at which the member of the wire break facilitator melts into a liquid state or a gas is preferably 20°C or more higher than the higher temperature of the molding temperature of the resin and the maximum achieving coil temperature when the electric motor is operating.

If this configuration is employed, there is no need to previously reduce the cross-sectional area of a part of the electric wire to address the case where an excessive current flows through the electric wire and heats the electric wire to a high temperature in a molded motor in which the electric wire included in the stator is covered with resin. In other words, if the present configuration is employed, it is possible to address the case where an excessive current flows through the electric wire and heats the electric wire to a high temperature, without changing the specifications of the electric motor itself. Specifically, with the present configuration, only when an excessive current flows and heats the electric wire to an abnormally high temperature, the electric wire is deformed, and the cross-sectional area of the electric wire is thus reduced, whereby the wire is facilitated to break, or the electric wire is cut as mentioned above; therefore, the present configuration is more preferable.

For example, this wire break facilitator is realized such that shape-memory alloy is used at a part of the wire break facilitator so that the shape-memory alloy activates a deforming unit when the temperature has reached a predetermined temperature, and the deforming unit has a shape that presses the electric wire located inside the wire break facilitator in an edged tool shape manner, a scissors shape manner, a point manner, or a line manner. If this wire break facilitator is used, the deforming unit can deform or cut the electric wire. The material and shape of the shape-memory alloy may be appropriately selected, depending on the environment in which the wire break facilitator operates. Specifically, in the electric motor of the exemplary embodiment of the present invention, it is preferable to use Ti-Ni-(Zr, Hf)-Nb alloy, Ti-Ta-Al alloy, Fe-Mn-Si alloy, or other alloys, which can be made to operate at an operation temperature of about 200°C.

Alternatively, in the wire break facilitator, instead of using the shape-memory alloy, spring-shaped metal may be used in a state that a part of the spring-shaped metal in a collapsed state is covered with thermoplastic resin or the like so that the spring-shaped metal does not move. If the present configuration is employed, since the thermoplastic resin starts to melt at a predetermined temperature, and thus, the spring-shaped part can operate to deform or cut the electric wire. The thermoplastic resin to be used can be appropriately selected, depending on the dimension and shape of the wire break facilitator or depending on the temperature at which the apply current should be shut off, in consideration of a melting temperature or a strength property.

Specifically, the following materials are preferably used: nylon 6, polybutylene terephthalate, polyvinyl alcohol, polyvinyl chloride, polyvinylidene chloride, polyacetal, nylon 12, polymethyl methacrylate, polyethylene terephthalate, polyvinylidene fluoride, nylon 66, polyphenylene sulfide, polyetherimide, polysulfone, acetyl cellulose, and ethyl cellulose.

Further, the material of the insulator used in the electric motor in the exemplary embodiment of the present invention may be any kind of materials, but the following materials are particularly preferable: polyethylene terephthalate, polybutylene terephthalate, polyphenylene sulfide, liquid crystal polymer, and glass-fiber reinforcement of these materials.

Further, examples of a resin molding material used in the electric motor in the exemplary embodiment of the present invention include thermosetting resin such as unsaturated polyester resin and phenol resin. In this case, unsaturated polyester resin is preferable from the point of view of properties and cost.

Hereinafter, exemplary embodiments of the present invention will be described with reference to the drawings. Note that, the following exemplary embodiments are specific examples of the present invention and do not limit the technical scope of the present invention.

### (First exemplary embodiment)

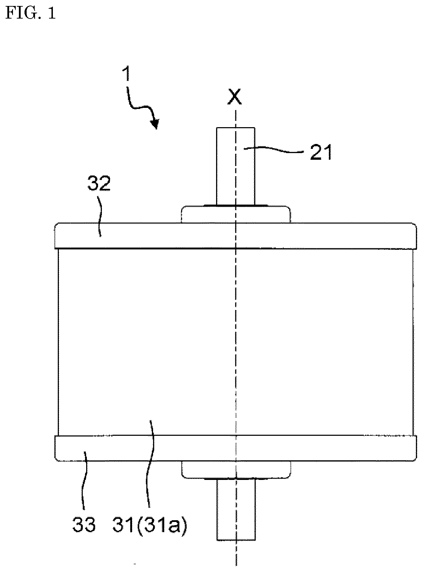

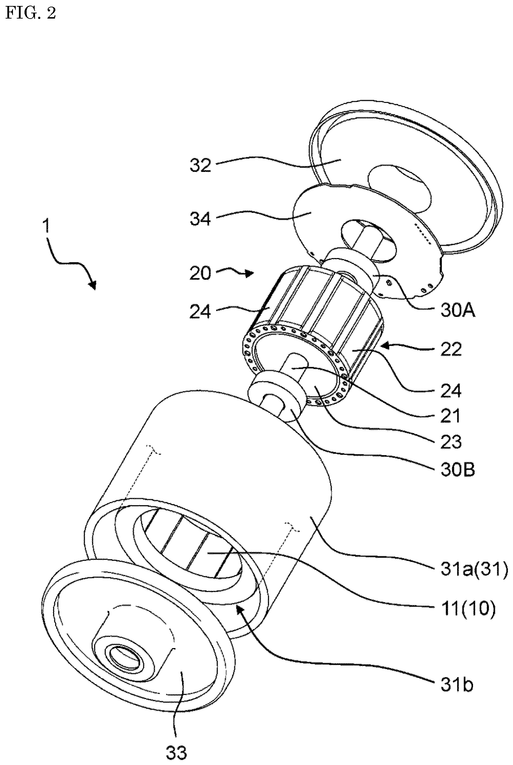

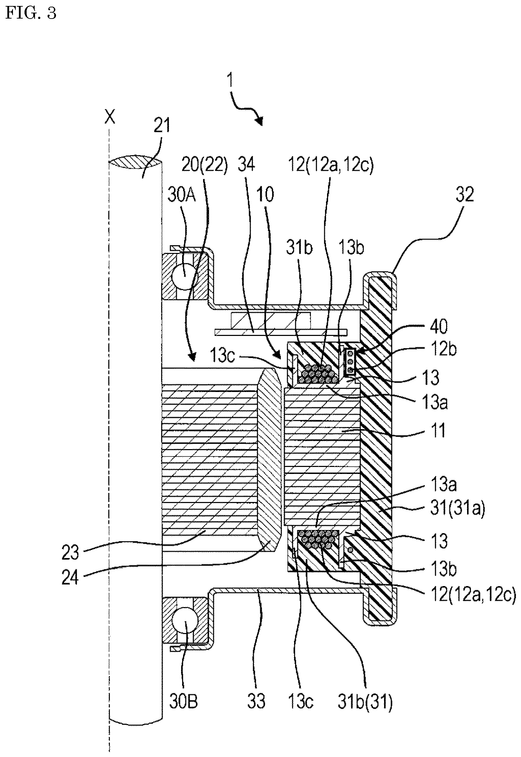

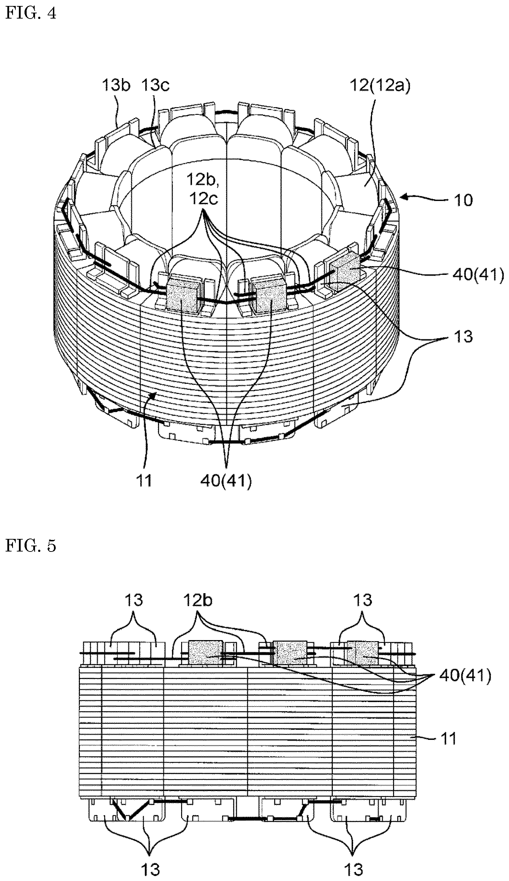

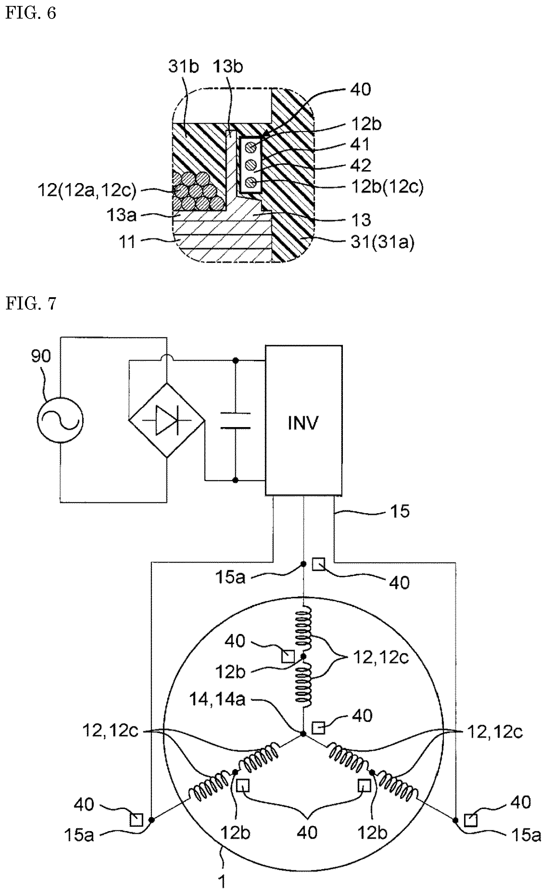

FIG. 1 is a front view of an electric motor according to a first exemplary embodiment of the present invention. FIG. 2 is an exploded perspective view of electric motor 1 of the first exemplary embodiment of the present invention. FIG. 3 is a side surface cross-sectional view, in which electric motor 1 of the first exemplary embodiment of the present invention is partially enlarged. FIG. 4 is a perspective view showing a stator used in electric motor 1 of the first exemplary embodiment of the present invention before the stator is resin-molded. FIG. 5 is a front view of the stator shown in FIG. 4. FIG. 6 is a main part explanatory diagram illustrating a wire break facilitator of the stator used in electric motor 1 of the first exemplary embodiment of the present invention. FIG. 7 is a schematic diagram illustrating electric motor 1 according to the first exemplary embodiment of the present invention when electric motor 1 is being used.

First, with reference to FIGS. 1 to 3, a description will be given on electric motor 1 according to the first exemplary embodiment of the present invention.

As shown in FIGS. 1 to 3, electric motor 1 according to the first exemplary embodiment of the present invention includes stator 10, rotor 20, a pair of shaft bearings 30A, 30B, and molding resin 31. Rotor 20 has rotary shaft 21 and is located inside stator 10. The pair of shaft bearings 30A, 30B rotatably support rotor 20. Molding resin 31 covers stator 10. In this case, electric motor 1 illustrated as an example is a brushless type. Further, in the first exemplary embodiment, electric motor 1 includes first metal case 32, second metal case 33, and circuit board 34 that look substantially a disk shape when a part of outer shell (chassis) of electric motor 1 is plan-viewed. Note that electric motor 1 is not limited to have this configuration.

Stator 10 includes: stator core (stator core) 11 configured with a plurality of laminated metal sheets; and coils (winding wire) 12 wound on stator core 11 (in detail, teeth of stator core 11 to be described later). Stator core 11 has: a yoke formed in a ring shape to surround rotor 20 disposed along shaft center (shaft center of rotary shaft 21) X; and a plurality of teeth protruding in a protruding shape from the yoke toward shaft center X

Rotor 20 has: rotary shaft 21 extending in a shaft center X direction; and rotary body 22 that includes a magnet component, extends in the shaft center X direction and is fixed to rotary shaft 21. Rotary body 22 has rotor core 23, and a plurality of magnets (permanent magnets) 24 attached to an outer peripheral surface of rotor core 23. Magnets 24 are assembled on the outer peripheral surface of rotor core 23 such that N-poles and S-poles of neighboring magnets 24 are alternately arranged. Rotor 20 is rotatably supported by shaft bearings 30A, 30B respectively fit in a central part of first metal case 32 and a central part of second metal case 33.

As shown in FIGS. 3 to 6, coils 12 are wound on stator core 11 via insulators 13 made of insulating material (for example, resin). Schematically, insulators 13 each have bottom surface part 13a, outer peripheral wall 13b, and inner peripheral wall 13c.

As shown in FIGS. 3 and 6, bottom surface parts 13a of insulators 13 are attached to end faces of stator core 11. In the present exemplary embodiment, bottom surface part 13a of each insulator 13 is formed of a plane extending in a direction that intersects with shaft center X. Outer peripheral wall 13b of each insulator 13 is vertically provided on the outer peripheral side of a part on which coil 12 is wound, and outer peripheral wall 13b restricts the position of coil 12. In the present exemplary embodiment, outer peripheral wall 13b of each insulator 13 is formed of a wall surface extending in a direction along shaft center X. Inner peripheral wall 13c of each insulator 13 is vertically provided on an inner peripheral side of a part on which coil 12 is wound, and inner peripheral wall 13c restricts the position of coil 12. Inner peripheral wall 13c of each insulator 13 is formed of a wall surface extending in a direction along shaft center X. As long as insulator 13 electrically insulates between coil 12 and stator core 11, a shape of insulator 13 is not limited to the above-described shape.

As shown in FIGS. 3 to 7, on electric motor 1 there are provided transition wires 12b, and coil 12 wound on each tooth is connected to coil 12 wound on another tooth through transition wire 12b. Transition wires 12b are attached to the outer peripheral sides or the like of outer peripheral walls 13b of insulators 13.

Each coil 12 has coil ends 12a protruding in the shaft center X direction from stator core 11 (in FIG. 3, sticking out and protruding upward and downward on the diagram). A coil main body of each coil 12 other than coil ends 12a is contained in stator core 11.

As shown in FIGS. 1 to 3, molding resin 31 covers coil 12, insulator 13, stator core 11 (except an inner peripheral surface on which the teeth are located) of stator 10 and the outer peripheral side areas (except wire break facilitators 40 to be described later) of insulators 13 on which transition wires 12b are located.

An outer peripheral surface of molding resin 31 is formed in a cylindrical shape and constitutes barrel (case barrel) 31a, which is a part of the outer shell (chassis) of electric motor 1.

Coil molds 31b cover coil ends 12a, insulators 13, and the outer peripheral side areas of insulators 13 on which transition wires 12b are located.

As shown in FIGS. 3 to 7, electric motor 1 according to the first exemplary embodiment includes: stator 10; molding resin 31, which is resin covering stator 10; wire break facilitators 40 that facilitate electric wire 12c constituting coils 12 to break at a time of abnormality. Stator 10 includes: stator core 11; and coils 12 that are configured with electric wire 12c wound on stator core 11 and constitute a plurality of phases.

Wire break facilitator 40 is attached to at least any one of: transition wire 12b parts provided between coils 12 wound on stator core 11; a connection part 14a at neutral point 14 of the plurality of phases constituted by coils 12; and connection parts 15a between electric wire 12c constituting coils 12 and lead wires 15 for supplying electric power to electric wire 12c from outside. In the descriptions to be given later, descriptions will be given on the case where wire break facilitators 40 are attached to the transition wire parts or the case where wire break facilitators 40 are attached to the connection parts of the lead wires.

In this case, the time of abnormality means a state that an excessive current, in other words, a so-called overcurrent flows mainly through electric wire 12c constituting coils 12. Alternatively, the time of abnormality includes a state that electric wire 12c heats to a high temperature as a result of a problem such as a layer short occurring in electric wire 12c constituting coils 12.

Wire break facilitators 40 are each a space containing air.

Further, a specific example will be described in detail with reference to the drawings.

As shown in FIGS. 3 to 6, wire break facilitators 40 are each attached to a part of corresponding transition wire 12b. On each wire break facilitator 40, there is an air layer, which is line break facilitating body 42, formed on a periphery of transition wire 12b. In other words, each wire break facilitator 40 prevents molding resin 31 from being attached to transition wire 12b. That is, wire break facilitators 40 save spaces for preventing transition wires 12b from being in touch with molding resin 31. Note that, in the first exemplary embodiment, electric motor 1 is illustrated taking as an example a three-phase motor having U-phase, V-phase, and W-phase. In the drawing, one wire break facilitator 40 is attached to transition wire 12b corresponding to each of U-phase, V-phase, and W-phase without being limited to this arrangement. Note that, in an assembling method (manufacturing method) of electric motor 1, stator 10 is resin-molded with molding resin 31, and rotor 20 is then assembled into stator 10.

As stator core 11, a plurality of laminated steel sheets having an outer diameter of 96 mm and a thickness of 35 mm are used. To stator core 11 are attached insulators 13 made of polybutyleneterephthalate (PBT). Coils 12 are formed of a polyurethane-nylon copper wire (copper wire covered with polyurethane and nylon), which is electric wire 12c, wound on stator core 11 via insulators 13. Transition wires 12b are each located between coil 12 and coil 12.

As shown in FIGS. 4 and 6, wire break facilitators 40 are attached to stator 10, and stator 10 has 12 slots. Wire break facilitators 40 are each a molded article made of PBT having a box shape (enclosure member 41). Each wire break facilitator 40 encloses transition wire 12b constituted by electric wire 12c and has, inside wire break facilitator 40, line break facilitating body 42 that is a space containing air. In the first exemplary embodiment, internal dimensions of wire break facilitator 40 are 8 mm × 4 mm × 2 mm. Each wire break facilitator 40 is formed of enclosure member 41 that is made of a PBT panel and has entrance ports for transition wire 12b. Each entrance port formed in enclosure member 41 is an opening 0.1 mm larger than an outer diameter of electric wire 12c. Each transition wire 12b passes the inside and the outside of corresponding wire break facilitator 40 through the entrance ports.

In the first exemplary embodiment, an evaluation was performed on three types of electric wires 12c constituting transition wires 12b, where the conductor diameters of the respective types were 0.2 mm (Invention sample 1), 0.4 mm (Invention sample 2), and 0.6 mm (Invention sample 3). Specifically, each of the three types of electric wires 12c was used to make stator 10 (in detail, part of stator 10 other than molding resin 31). Regarding each stator 10, the outer peripheral parts of coil ends 12a and stator core 11 were covered with unsaturated polyester resin (BMC). In this manner, stators 10 to which molding resin 31 was attached were completed.

Molding die temperature was set to 150°C when molding resin 31 was attached. By assembling rotor 20 in each stator 10 to which molding resin 31 was attached, each electric motor 1 was assembled. As shown in FIG. 7, lead wires 15 were attached to lead wire terminals attached to insulator 13, where lead wires 15 were to supply electricity to coils 12 of stator 10 from power supply 90 located outside electric motor 1. Specifically, lead wires 15 were wound around the respective lead wire terminals and were soldered, and ceramic adhesive was applied to fix. As a result, connection parts 15a between lead wires 15 and lead wire terminals were fixed so that connection parts 15a would not come off even if the temperature might rose up to about 500°C.

Note that one of stators 10 that were resin-molded was cut, and it was confirmed that molding resin 31 did not enter the space in wire break facilitator 40 and that the space (which was one type of the inner member provided in wire break facilitator 40) was kept vacant.

In addition, for comparison with the first exemplary embodiment, a stator on which no wire break facilitator provided was manufactured. In the stator for comparison, an electric wire having a conductor diameter of 0.4 mm was used (Comparison sample 1). As the stator for comparison, the stator that was resin-molded was completed by directly covering the transition wires with molding resin made of BMC. After that, the rotor was assembled in the stator, and the electric motor was assembled in the same manner as in the first exemplary embodiment.

A burning test was conducted in the following method by using the differently manufactured electric motors.

Before the burning test was conducted, the following preparations were made. A thermocouple was attached in the vicinity of the surface of the coil located inside the resin-mold so that the temperature could be checked during the test. After the thermocouple was attached in the vicinity of the surface of the coil, absorbent cotton was attached to the entire outer periphery of the electric motor with pasting material such as glue. Next, a direct current power supply device using a full-wave rectifier circuit was prepared, and a DC voltage was applied to arbitrary two phases of each electric motor. The voltage of the applied DC voltage was gradually increased to raise the temperature of the electric motor little by little. The current supplied to the electric motor and the voltage applied to the electric motor were continuously measured. When the measured current and voltage change rapidly, in particular, when the measured current increases rapidly, a layer short or the like was determined to occur in the coil. When a layer short was determined to occur in the coil, the voltage was once reduced, and after the current value got stable, the voltage was increased again and adjusted such that a gradient of the temperature rise was constant.

Through this test, it was checked whether the electric wire of the electric motor was broken to shut off the current or the absorbent cotton ignited. The results of the test are shown in Table 1.

**[Table 1]**

| Sample | Invention sample 1 | Invention sample 2 | Invention sample 3 | Comparison sample 1 |
|---|---|---|---|---|
| Conductor diameter | 0.2 mm | 0.4 mm | 0.6 mm | 0.4 mm |
| Highest achieved temperature | 220°C | 250°C | 280°C | 450°C |
| Result | Wire broken | Wire broken | Wire broken | Ignition occurred |

The samples whose wires were broken were broken down to examine the place where the wire was broken. As a result, it was confirmed that, for all of the samples, electric wire 12c constituting transition wire 12b was broken on at least one part in wire break facilitator 40.

The above results show that electric wire 12c constituting transition wire 12b to which wire break facilitator 40 was attached was facilitated to break by attaching wire break facilitator 40 having an air layer in such a manner that that the resin-mold was not directly attached to transition wire 12b. Therefore, it has been confirmed that electric motor 1 can be prevented from igniting. As the conductor diameter of electric wire 12c increases, the highest achieved temperature also increases accordingly. Therefore, it has been confirmed that even if wire break facilitator 40 is attached, the wire tends to less easily break.

As described above, electric motor 1 of the present exemplary embodiment includes: stator 10; resin covering stator 10; and wire break facilitators 40 that facilitate electric wire 12c to break at a time of abnormality. Stator 10 includes: stator core 11; and coils 12 that are configured with electric wire 12c wound on stator core 11 and constitute a plurality of phases. Wire break facilitator 40 is attached to at least any one of: transition wire parts provided between coils 12 wound on stator core 11; a connection part at neutral point 14 of the plurality of phases constituted by coils 12; and connection parts between electric wire 12c and lead wires 15 for supplying electric power to electric wire 12c from outside.

With this configuration, even if a common conventional safety protection circuit does not normally function and an excessive current flows through the coils of the stator, a temperature rises most quickly at any one of the following parts where the wire break facilitator is attached: the transition wire parts between the coils; the connection part at the neutral point between the coils; and the connection parts between the electric wire and the lead wires. Therefore, the electric wire at the part to which the wire break facilitator is attached melts and breaks, and power supply to the electric motor is thus shut off. As a result, the electric motor can be prevented from igniting.

Further, wire break facilitator 40 may be a space containing air.

### (Second exemplary embodiment)

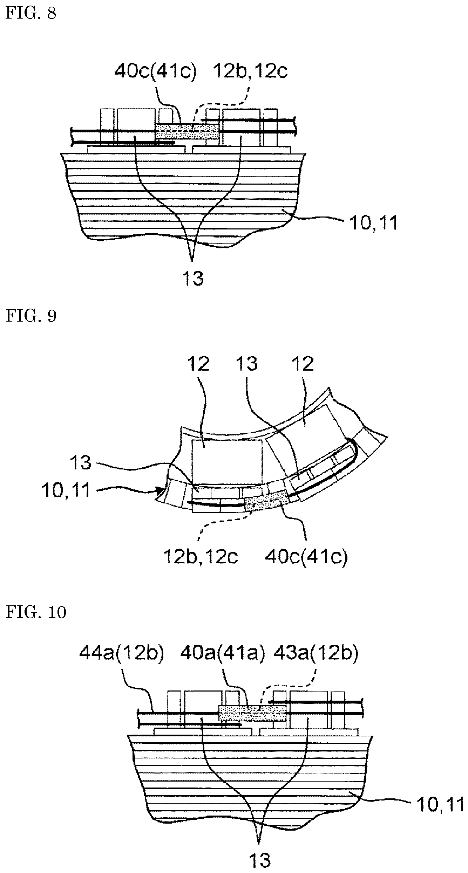

FIG. 8 is a main part enlarged view showing a stator of an electric motor according to a second exemplary embodiment of the present invention before the stator is resin-molded. FIG. 9 is a plan view of the stator shown in FIG. 8.

As shown in FIGS. 8 and 9, wire break facilitator 40c in the electric motor according to the second exemplary embodiment is formed of a member that melts into a liquid state at a temperature higher than the higher temperature of a molding temperature of molding resin 31, which is resin, and the maximum achieving coil temperature when the electric motor is operating.

In particular, the temperature at which the member that melts into a liquid state is preferably 20°C or more higher than the higher temperature of the molding temperature of the resin and the maximum achieving coil temperature when the electric motor is operating.

In particular, for the member that melts into a liquid state, the following materials can be used: nylon 6, polybutylene terephthalate, polyvinyl alcohol, polyvinyl chloride, polyvinylidene chloride, polyacetal, nylon 12, polymethyl methacrylate, polyethylene terephthalate, polyvinylidene fluoride, nylon 66, polyphenylene sulfide, polyetherimide, polysulfone, acetyl cellulose, and ethyl cellulose.

A specific example will be described in detail with reference to the drawings. Note that the components similar to the already described components are assigned the same reference marks, and the corresponding descriptions are used.

First, the difference between the electric motor according to the second exemplary embodiment and the electric motor according to the first exemplary embodiment is in the wire break facilitator. As shown in FIGS. 8 and 9, as wire break facilitator 40c used in the electric motor according to the second exemplary embodiment, a silicone glass tube is used, and the dimensions of the silicon glass tube are inner diameter 2 mm × length 20 mm. Similarly to the first exemplary embodiment, transition wire 12b to be described later is located in wire break facilitator 40c.

In enclosure member 41c, which is wire break facilitator 40c, there is inserted an inner member that is made up of a molded article (outer diameter: 1.8 mm, length: 15 mm) made of nylon 12 (melting point: 180°C) and that has a hole having diameter 0.1 mm larger than the diameter of electric wire 12c constituting transition wire 12b. In the hole of the molded article, there is inserted electric wire 12c constituting transition wire 12b is inserted. The entrance ports, of enclosure member 41c, for electric wire 12c constituting transition wire 12b were sealed by applying epoxy resin. Stators 10 were manufactured in the above-described manner.

In the present exemplary embodiment, an evaluation was performed on three types of electric wires 12c constituting transition wires 12b, where the conductor diameters of the respective types were 0.2 mm (Invention sample 4), 0.4 mm (Invention sample 5), and 0.6 mm (Invention sample 6).

Other than the above, electric motors having the same configuration as the electric motors shown in the first exemplary embodiment except break facilitator 40c were manufactured, and the same burning test as in the first exemplary embodiment was conducted on the electric motors. The results of the test are shown in Table 2.

**[Table 2]**

| Sample | Invention sample 4 | Invention sample 5 | Invention sample 6 |
|---|---|---|---|
| Conductor diameter | mm | 0.4 mm | 0.6 mm |
| Highest achieved temperature | 220°C | 250°C | 260°C |
| Result | Wire broken | Wire broken | Wire broken |

The samples whose wires were broken were broken down to examine the place where the wire was broken. As a result, it was confirmed that, for all of the samples, electric wire 12c constituting transition wire 12b was broken on at least one part in wire break facilitator 40c.

It was confirmed that also in the case that wire break facilitator 40c was thermoplastic resin, the wire was broken in wire break facilitator 40c in almost the same way as the first exemplary embodiment.

Note that instead of the above-mentioned wire break facilitator 40c, a wire break facilitator can be formed of a member that melts into a gas at a temperature higher than the higher temperature of the molding temperature of the resin and the maximum achieving coil temperature when the electric motor is operating.

In particular, the temperature at which the member of the wire break facilitator melts into a liquid state or a gas is preferably 20°C or more higher than the higher temperature of the molding temperature of the resin and the maximum achieving coil temperature when the electric motor is operating.

### (Third exemplary embodiment)

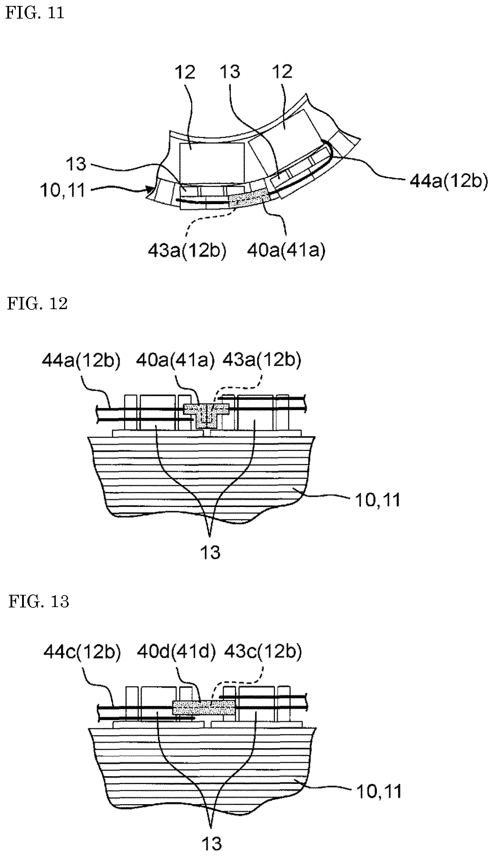

FIG. 10 is a main part enlarged view showing a stator of an electric motor according to a third exemplary embodiment of the present invention before the stator is resin-molded. FIG. 11 is a plan view of the stator shown in FIG. 10. FIG. 12 is a main part enlarged view showing the stator of the electric motor according to the third exemplary embodiment of the present invention before the stator is resin-molded in a different manner.

As shown in FIGS. 10 to 12, in the electric motor according to the third exemplary embodiment, a part, of electric wire 43a, located inside wire break facilitator 40a has a smaller cross-sectional area than a part, of electric wire 44a, located outside wire break facilitator 40a. In particular, electric wire 43a located inside wire break facilitator 40a is formed to be bent.

A specific example will be described in detail with reference to the drawings. Note that the components similar to the already described components are assigned the same reference marks, and the corresponding descriptions are used.

First, the difference between the electric motor according to the third exemplary embodiment and the electric motor according to the first exemplary embodiment is in the wire break facilitator. As shown in FIGS. 10 and 11, as wire break facilitator 40a used in the electric motor according to the third exemplary embodiment, enclosure member 41a, which is a silicone glass tube, is used, and the dimensions of the silicon glass tube are inner diameter 2 mm × length 20 mm in the same manner as in the second exemplary embodiment. In wire break facilitator 40a, there is located transition wire 12b to be described later, in the same manner as in the first exemplary embodiment.

As shown in FIG. 12, transition wire 12b was bent together with the silicone tube, which was wire break facilitator 40a. Specifically, electric wire 43a constituting transition wire 12b was bent for four times each by almost 90°. After that, the entrance ports for electric wire 43a constituting transition wire 12b were sealed by applying epoxy adhesive.

Other than the above, electric motors having the same configuration as the electric motors shown in the first exemplary embodiment except break facilitator 40a were manufactured. Further, the same burning test as described in the first exemplary embodiment was conducted.

In the third exemplary embodiment, an evaluation was performed on three types of electric wires 43a constituting transition wires 12b, where the conductor diameters of the respective types were 0.2 mm (Invention sample 7), 0.4 mm (Invention sample 8), and 0.8 mm (Invention sample 9).

The comparative example for this test did not include the enclosure member made of a silicone glass tube. In the comparative example for this test, the transition wire having a conductor diameter 0.4 mm was bent for four times each by almost 90°, and the bent transition wire was directly covered with molding resin, whereby the stator that was resin-molded was manufactured (Comparison sample 2). After that, the same test as in the first exemplary embodiment was conducted. The results of the test are shown in Table 3.

**[Table 3]**

| Sample | Invention sample 7 | Invention sample 8 | Invention sample 9 | Comparison sample 2 |
|---|---|---|---|---|
| Conductor diameter | 0.2 mm | 0.4 mm | 0.8 mm | 0.4 mm |
| Highest achieved temperature | 220°C | 220°C | 240°C | 440°C |
| Result | Wire broken | Wire broken | Wire broken | Ignition occurred |

The samples whose wires were broken were broken down to examine the place where the wire was broken. As a result, it was confirmed that, for all of the samples, electric wire 43a constituting transition wire 12b was broken on at least one part in wire break facilitator 40a.

In the same way as in the first exemplary embodiment, the wire was broken in all of the invention samples. However, for the comparison sample, in which the transition wire was directly resin-molded, the highest achieved temperature was higher than or equal to 400°C, and the electric motor ignited.

The results show that by bending electric wire 43a constituting transition wire 12b, the highest achieved temperature tends to be slightly lower compared with the first exemplary embodiment. In addition, it has been confirmed that there is a tendency that the larger the conductor diameter of electric wire 43a is the more effect the bending is.

To reduce cross-sectional area of electric wire 43a constituting transition wire 12b, electric wire 43a may be stretched, or electric wire 43a may be twisted.

As described above, a part, of electric wire 43a, located inside wire break facilitator 40a of the present exemplary embodiment has a smaller cross-sectional area than a part, of electric wire 44a, located outside wire break facilitator 40a.

In a method for manufacturing an electric motor of the present exemplary embodiment, a part, of electric wire 43a, located inside wire break facilitator 40g is stretched.

Alternatively, in a manufacturing method of the electric motor of the present exemplary embodiment, a part, of electric wire 43a, located inside wire break facilitator 40g may be twisted. As a result, it is possible to obtain an electric motor in which a part, of electric wire 43a, located inside wire break facilitator 40g is twisted.

Alternatively, in a manufacturing method of the electric motor of the present exemplary embodiment, a part, of electric wire 43a, located inside wire break facilitator 40g may be bent. As a result, it is possible to obtain an electric motor in which a part, of electric wire 43a, located inside wire break facilitator 40g is bent.

### (Fourth exemplary embodiment)

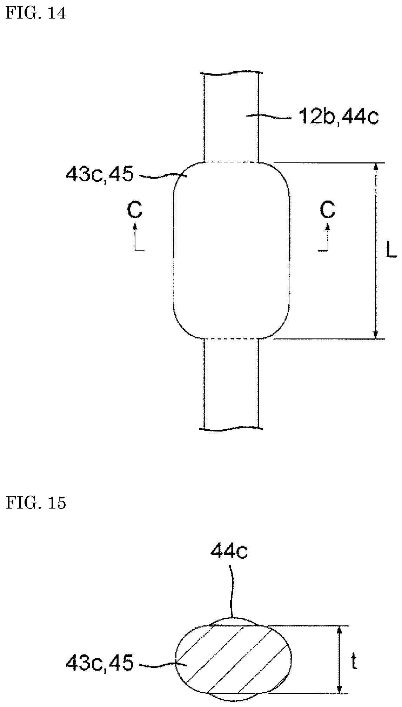

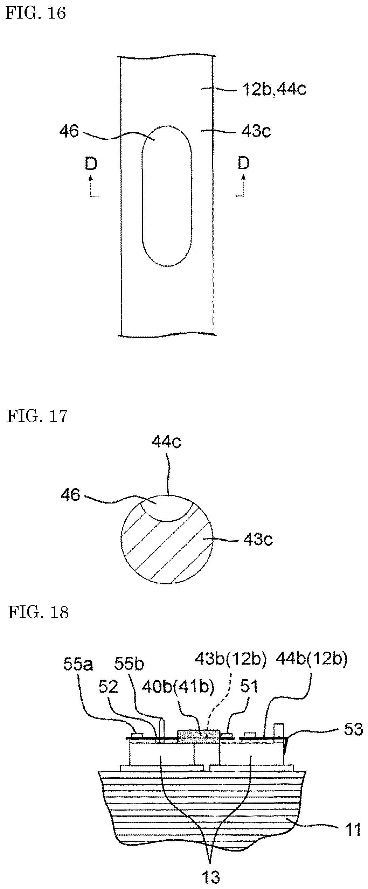

FIG. 13 is a main part enlarged view showing a stator of an electric motor according to a fourth exemplary embodiment of the present invention before the stator is resin-molded. FIG. 14 is a main part enlarged view of a transition wire located inside a wire break facilitator used in the electric motor. FIG. 15 is a cross-sectional view of the transition wire taken along line C-C in FIG. 14. FIG. 16 is a main part enlarged view of another transition wire located inside the wire break facilitator used in the electric motor. FIG. 17 is a cross-sectional view of the transition wire taken along line D-D in FIG. 16.

As shown in FIGS. 13 and 14, regarding electric wire 43c constituting transition wire 12b located inside wire break facilitator 40d in the electric motor according to the fourth exemplary embodiment, flattened part 45 in which electric wire 43c is deformed in a flattened shape has a smaller cross-sectional area than a part, of electric wire 44c, located outside wire break facilitator 40d.

A specific example will be described in detail with reference to the drawings. Note that the components similar to the already described components are assigned the same reference marks, and the corresponding descriptions are used.

First, the difference between the electric motor according to the fourth exemplary embodiment and the electric motor according to the first exemplary embodiment is in the cross-sectional area of the electric wire located inside the wire break facilitator. As shown in FIG. 13, as wire break facilitator 40d used in the fourth exemplary embodiment, a silicone glass tube is used, and the dimensions of the silicon glass tube are inner diameter 2 mm × length 20 mm, which are the same as in the third exemplary embodiment. As shown in FIGS. 14 and 15, regarding electric wire 43c constituting transition wire 12b located inside wire break facilitator 40d, the cross-sectional shape is deformed in a flattened shape for a length L of 5 mm. The cross-sectional shape is deformed by a pressure applied from the periphery. The entrance ports of wire break facilitator 40d were sealed with epoxy adhesive. Stators 10 were manufactured in the above-described manner.

In this case, for the evaluation of the fourth exemplary embodiment to be performed, a polyurethane copper wire having a conductor diameter of 0.8 mm was used as electric wire 44c constituting transition wire 12b. As shown in FIG. 15, flattened part 45 was formed by compressing transition wire 12b. A thicknesses t of flattened part 45 of prepared transition wires 12b were the following four thicknesses: 100% (Invention sample 10) indicating an initial state, which was not deformed, 80% (Invention sample 11), 60% (Invention sample 12), and 40% (Invention sample 13).

Other than the above, electric motors having the same configuration as the electric motors shown in the first exemplary embodiment except break facilitator 40d were manufactured. Further, the same burning test as described in the first exemplary embodiment was conducted.

For comparison, there was also prepared Comparison sample 3, in which a silicone glass tube, which was wire break facilitator 40d, was not used. Specifically, for Comparison sample 3, an electric wire was prepared in which a pressure was applied to a transition wire having a conductor diameter of 0.8 mm until the thickness of the flattened part was reduced to 40%. A stator was manufactured in which this transition wire was directly resin-molded, and the same test was conducted on the stator. The results of the test are shown in Table 4.

**[Table 4]**

| Sample | Invention sample 10 | Invention sample 11 | Invention sample 12 | Invention sample 13 | Comparison sample 3 |
|---|---|---|---|---|---|
| Flattened part's thickness | 100% | 80% | 60% | 40% | 40% |
| Highest achieved temperature | 380°C | 320°C | 290°C | 260°C | 420°C |
| Result | Wire broken | Wire broken | Wire broken | Wire broken | Ignition occurred |

The samples whose wires were broken were broken down to examine the place where the wire was broken. As a result, it was confirmed that, for all of the samples, electric wire 43c constituting transition wire 12b was broken on at least one part in wire break facilitator 40d.

It has been confirmed that if a cross-sectional area of a main part of the electric wire constituting the transition wire is deformed in a flattened shape, the wire can be made to easily break even in the case where a wire having a larger conductor diameter is used as the wire, and the highest achieved temperature is accordingly increased so that the wire is supposed to hardly break.

In the case of Comparison sample 3, the cross-section of a main part of the electric wire constituting the transition wire was deformed in a flattened shape, but the part deformed in a flattened shape was firmly molded with resin, the electric wire did not break and raised its temperature, and the electric wire then ignited.

Instead of using the above-mentioned electric wire, as shown in FIGS. 16 and 17, regarding the part, of electric wire 43c, located inside wire break facilitator 40d, a part 46 in which electric wire 43c is deformed in a recessed shape may have a smaller cross-sectional area than the part, of electric wire 44c, located outside wire break facilitator 40d.

As described above, regrading the part, of electric wire 43c, located inside wire break facilitator 40d of the present exemplary embodiment, the part where electric wire 43c is deformed in a flattened shape has a smaller cross-sectional area than the part, of electric wire 44c, located outside wire break facilitator 40d.

### (Fifth exemplary embodiment)

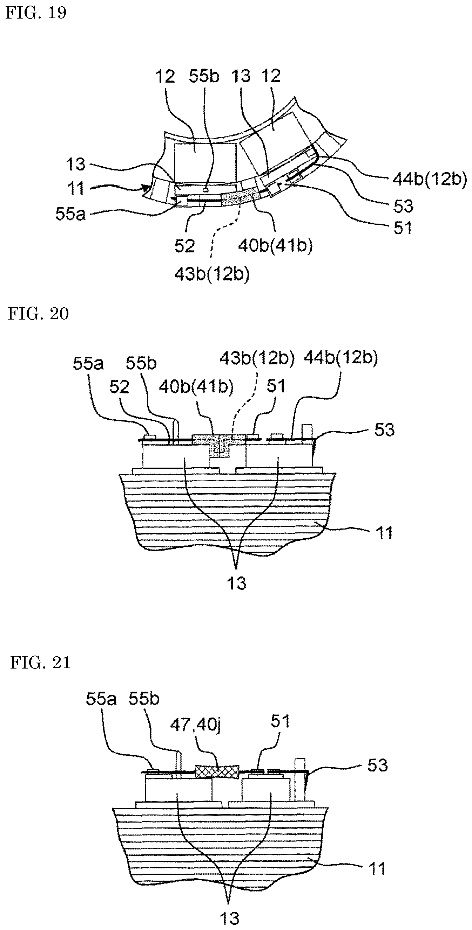

FIG. 18 is a main part enlarged view showing a stator of an electric motor according to a fifth exemplary embodiment of the present invention before the stator is resin-molded. FIG. 19 is a plan view of the stator shown in FIG. 18. FIG. 20 is a main part enlarged view showing the stator of the electric motor according to the fifth exemplary embodiment of the present invention before the stator is resin-molded in a different manner.

As shown in FIGS. 18 and 19, in the electric motor according to the fifth exemplary embodiment, a part, of electric wire 43b, located inside wire break facilitator 40b has a smaller cross-sectional area than a part, of electric wire 44b, located outside wire break facilitator 40b. In particular, electric wire 43b located inside wire break facilitator 40b is configured with an electric wire having a smaller wire diameter than electric wire 44b located outside wire break facilitator 40b.

A specific example will be described in detail with reference to the drawings. Note that the components similar to the already described components are assigned the same reference marks, and the corresponding descriptions are used.

First, the difference between the electric motor according to the fifth exemplary embodiment and the electric motor according to the third exemplary embodiment is in how to reduce the wire diameter of the electric wire constituting transition wire 12b located inside wire break facilitator.

As an example of how to realize the fifth exemplary embodiment, the following method is used. Specifically, insulator 13 made of PBT has connection terminal 51 for changing the diameter of the electric wire. To one end of connection terminal 51, there is connected coil wire 53 by fusing. The word fusing is also referred to as thermal swaging. To the other end of connection terminal 51, there is connected thin electric wire 52 by fusing, and thin electric wire 52 has a smaller diameter and a smaller cross-sectional area than coil wire 53. Thin electric wire 52 passes through wire break facilitator 40b made up of a silicone glass tube having dimensions of inner diameter 2 mm × length 15 mm, and is connected to connecting part 55a included in connection terminal 55b. Thin electric wire 52 is electrically connected to connecting part 55a by fusing.

Regarding the electric motor of the above configuration, driving power for electric motor 1 is supplied through lead wire 15 extending from power supply 90 located outside electric motor 1. Lead wire 15 is connected to connection terminal 55b. Electric motor 1 is supplied with electric power necessary to drive electric motor 1 via connection terminal 55b from lead wire 15. Specifically, a current to be supplied to electric motor 1 is supplied to coil wire 53 through thin electric wire 52 from lead wire 15.

In the fifth exemplary embodiment, as electric wire 44b, which was serving as coil wire 53, a polyurethane-nylon copper wire having a conductor diameter of 0.8 mm was used. As electric wire 43b, which was thin electric wire 52, a polyurethane-nylon copper wire having a conductor diameter of 0.4 mm was used. Entrance ports of enclosure member 41b made up of a silicone glass tube through which thin electric wire 52 was inserted were sealed by applying epoxy adhesive. Therefore, molding resin was prevented from entering inside of enclosure member 41b made up of a silicone glass tube.

Other than the above, electric motors having the same configuration as the electric motors shown in the first and other exemplary embodiments except wire break facilitator 40b were manufactured, and the same burning test as in the first exemplary embodiment was conducted on the electric motors.

Further, for comparison, an electric motor was manufactured in which wire break facilitator 40b was bent as shown in FIG. 20, and the same burning test was conducted on the electric motor. Specifically, transition wire 12b was bent together with the silicone tube, which was wire break facilitator 40b. In particular, transition wire 12b was bent for four times each by almost 90°. The results of the evaluation performed in addition to the above-mentioned third exemplary embodiment are shown in Table 5.

**[Table 5]**

| Sample | Invention sample 14 | Invention sample 15 |
|---|---|---|
| Bending of thin electric wire | Not bent | Bent |
| Highest achieved temperature | 220°C | 210°C |
| Result | Wire broken | Wire broken |

The samples whose wires were broken were broken down to examine the place where the wire was broken. As a result, it was confirmed that, for all of the samples, electric wire 43b constituting thin electric wire 52 was broken on at least one part in wire break facilitator 40b.

The above results show that in the case where the conductor diameter of electric wire 44b, which is coil wire 53, is so large that electric wire 44b is supposed to hardly melt and break, it is possible to use electric wire 43b, which is thin electric wire 52 having a smaller conductor diameter than coil wire 53, where the electric wire 43b is used via connection terminals 51, 55b. As a result, since the conductor diameter of the electric wire is small, the electric wire easily melts and breaks. Further, it has been confirmed that if a treatment is performed such as bending a part of the electric wire, the electric wire more easily melts and breaks.

As described above, electric wire 43b located inside wire break facilitator 40b of the present exemplary embodiment is configured with electric wire 43b having a smaller wire diameter than electric wire 44b located outside wire break facilitator 40b.

### (Sixth exemplary embodiment)

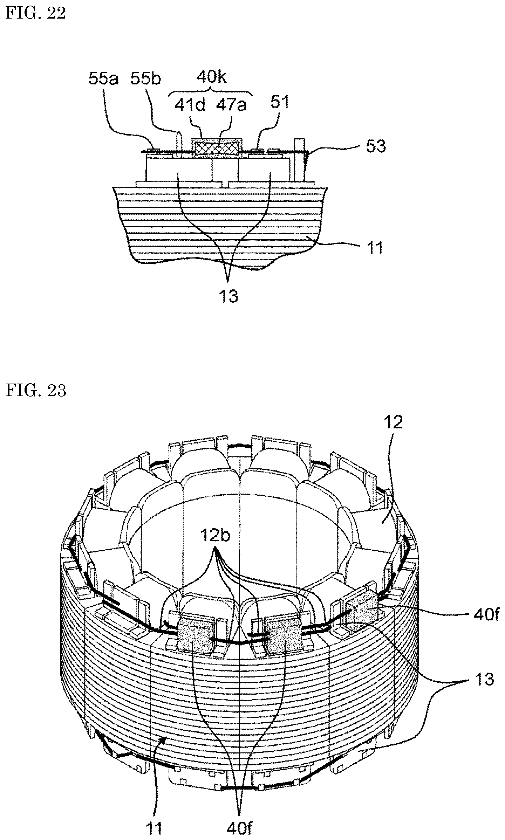

FIG. 21 is a main part enlarged view showing a stator of an electric motor according to a sixth exemplary embodiment of the present invention before the stator is resin-molded. FIG. 22 is a main part enlarged view showing the stator of the electric motor according to the sixth exemplary embodiment of the present invention before the stator is resin-molded in a different manner.

As shown in FIG. 21, wire break facilitator 40j in the electric motor according to the sixth exemplary embodiment is formed of a thermosensitive conductive member that breaks at a temperature higher than the higher temperature of a molding temperature of molding resin 31, which is resin, and the maximum achieving coil temperature when the electric motor is operating.

In particular, the temperature at which the member of wire break facilitator 40j melts into a liquid state or a gas is preferably 20°C or more higher than the higher temperature of the molding temperature of the resin and the maximum achieving coil temperature when the electric motor is operating.

In particular, thermosensitive conductive member is resistor 47.

A specific example will be described in detail with reference to the drawings. Note that the components similar to the already described components are assigned the same reference marks, and the corresponding descriptions are used.

First, the difference between the electric motor according to the sixth exemplary embodiment and the already-described electric motors according to the other exemplary embodiments is in the wire break facilitator. As shown in FIG. 21, wire break facilitator 40j used in the electric motor according to the sixth exemplary embodiment is configured with resistor 47, which is a thermosensitive conductive member.

Next, insulator 13 made of PBT has connection terminal 51 similarly to the fifth exemplary embodiment. To one end of connection terminal 51, there is connected coil wire 53 by fusing. To the other end of connection terminal 51, there is connected a terminal of resistor 47, which is a thermosensitive conductive member. The terminal of resistor 47 is swaged to connection terminal 51 and is then soldered.

Similarly to the fifth exemplary embodiment, a drive current is supplied to the electric motor through a lead wire extending from a power supply located outside the electric motor. The lead wire is connected to connection terminal 55b attached to another insulator 13. Connection terminal 55b and the other terminal included in resistor 47 are connected to each other via connecting part 55a. Specifically, the other terminal of resistor 47 is swaged to connecting part 55a and is then soldered. Connecting part 55a and connection terminal 55b are configured to be electrically connected to each other.

With the above configuration, the drive current supplied through the lead wire from the power supply located outside the electric motor flows into connection terminal 55b. The drive current having flown into connection terminal 55b flows into resistor 47 via connecting part 55a. The drive current having flown into resistor 47 flows into coil wire 53 via connection terminal 51.

In this case, as coil wire 53, a polyurethane-nylon copper wire having a conductor diameter of 0.8 mm was used. As resistor 47, which was a thermosensitive conductive member, a coat-insulated zero ohm resistor having a resistance value of 20 mΩ or lower and a maximum allowable current of 1.5 A was used.

In addition, in the sixth exemplary embodiment, another aspect as shown in FIG. 22 was prepared to perform an evaluation. Specifically, in another electric motor according to the sixth exemplary embodiment, wire break facilitator 40k includes: resistor 47a, which is a thermosensitive conductive member; and enclosure member 41d.

The resistor 47a breaks at a temperature higher than the higher temperature of the molding temperature of molding resin 31, which is resin, and the maximum achieving coil temperature when the electric motor is operating.

In particular, the temperature at which the member of wire break facilitator 40k melts into a liquid state or a gas is preferably 20°C or more higher than the higher temperature of the molding temperature of the resin and the maximum achieving coil temperature when the electric motor is operating.

Enclosure member 41d forms a space containing air in the periphery of the thermosensitive conductive member. Enclosure member 41d can be realized by a silicone glass tube. Epoxy adhesive is applied to entrance ports of enclosure member 41d, so that an inside space of enclosure member 41d is sealed. That is, inside wire break facilitator 40k, there is formed an air layer between enclosure member 41d and resistor 47a. In other words, since the entrance ports of enclosure member 41d of wire break facilitator 40k are sealed with epoxy adhesive, molding resin 31 is prevented from entering inside of enclosure member 41.

Other than the above, electric motors having the same configuration as the electric motors shown in the first exemplary embodiment except wire break facilitators 40j, 40k were manufactured, and the same burning test as in the first exemplary embodiment was conducted on the electric motors.

The results of the test are shown in Table 6.

**[Table 6]**

| Sample | Invention sample 16 | Invention sample 17 |
|---|---|---|
| Configuration of wire break facilitator | Specified in Fig. 21 | Specified in Fig. 22 |
| Highest achieved temperature | 200°C | 190°C |
| Result | Wire broken | Wire broken |

The samples whose wires were broken were broken down to examine the place where the wire was broken. As a result, it was confirmed that for both of Invention samples 16 and 17, resistor 47a, which was thermosensitive conductive member, was broken.

The above results show that in the case where the conductor diameter of the electric wire, which is coil wire 53, is so large that the electric wire is supposed to hardly melt and break, it is possible to connect resistor 47, which is a thermosensitive conductive member, via connection terminal 55b to which the lead wire is connected. Therefore, it has been confirmed that when an overcurrent flows through coil wire 53 or other causes occur and resistor 47 has reached a predetermined operation temperature, resistor 47 easily melts and break.

It has been further confirmed that resistor 47a melts and breaks at a lower temperature in the case where enclosure member 41 is used to form an air layer in the periphery of resistor 47a, which is a thermosensitive conductive member. That is, it has been confirmed that resistor 47a enclosed by enclosure member 41 can melt and break more easily.

A commonly used fixed resistor can be used as resistor 47a. Specifically, examples of the fixed resistor include: a carbon film fixed resistor, a metal film fixed resistor, a metal oxide film fixed resistor, and a wire wound fixed resistor.

Further, in consideration of how wire break facilitators 40j, 40k are attached, a shape of the fixed resistor can be appropriately selected from a surface mount type, a lead type, and other types.

Note that there is the following requirement on resistor 47a to be used. It is necessary to reduce affection of resistor 47a to the characteristics and the reliability of the electric motor when the electric motor is being normally operated. On the other hand, resistor 47a to be used has to have a characteristic that the resistor breaks only when an overload current or the like flows through the electric motor and the temperature has thus reached the above-mentioned temperature. The characteristics of resistor 47a to be used such as a resistance value, a rated power, an allowable current, and the like are appropriately selected depending on the characteristics and the reliability required to the electric motor.

Although the above description is given taking resistors 47, 47a as an example of the thermosensitive conductive member, other components can be used as long as the same action and effect can be provided. For example, a jumper wire or a fuse can be used as the thermosensitive conductive member.

As described above, wire break facilitator 40j of the present exemplary embodiment is formed of a thermosensitive conductive member that breaks at a temperature higher than the higher temperature of the molding temperature of the resin and the maximum achieving coil temperature when the electric motor is operating.

Further, wire break facilitator 40j includes: a thermosensitive conductive member breaks at a temperature higher than the higher temperature of the molding temperature of the resin and the maximum achieving coil temperature when the electric motor is operating; and enclosure member 41 that encloses the thermosensitive conductive member in such a manner that enclosure member 41 forms a space on the periphery of the thermosensitive conductive member.

Further, thermosensitive conductive member may be resistor 47.

### (Seventh exemplary embodiment)

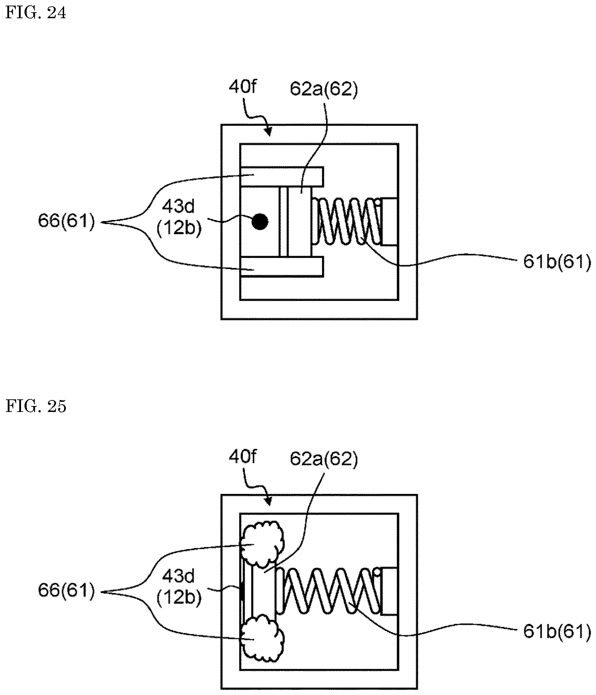

FIG. 23 is a perspective view showing a stator of an electric motor according to a seventh exemplary embodiment of the present invention before the stator is resin-molded. FIG. 24 is an explanatory diagram of a holder included in a wire break facilitator used in the electric motor before the holder operates. FIG. 25 is an explanatory diagram of the holder included in the wire break facilitator used in the electric motor after the holder operates.

As shown in FIGS. 23 to 25, wire break facilitator 40f used in the electric motor according to the seventh exemplary embodiment includes: edged tool 62a, which is deforming unit 62 that deforms electric wire 43d constituting transition wire 12b; and holder 61. Holder 61 is formed of coil spring 61b holding edged tool 62a, which is deforming unit 62, together with hot-melting resin 66. Hot-melting resin 66 is a member that melts into a liquid state at a temperature higher than the higher temperature of the molding temperature of the resin and the maximum achieving coil temperature at the time of operation.

In particular, the temperature at which the member of wire break facilitator 40f melts into a liquid state or a gas is preferably 20°C or more higher than the higher temperature of the molding temperature of the resin and the maximum achieving coil temperature when the electric motor is operating.

When holder 61 has melted into a liquid state in wire break facilitator 40f, edged tool 62a, which is deforming unit 62, moves in a predetermined movable range.

A specific example will be described in detail with reference to the drawings. Note that the components similar to the already described components are assigned the same reference marks, and the corresponding descriptions are used.

First, the difference between the electric motor according to the seventh exemplary embodiment and the electric motor according to the first exemplary embodiment is in the wire break facilitator. In the electric motor according to the seventh exemplary embodiment, wire break facilitator 40f having the following internal structure is used.

As shown in FIG. 24, wire break facilitator 40f contains: stainless-steel edged tool 62a, which is deforming unit 62; and coil spring 61b and hot-melting resin 66, which are holder 61.

Edged tool 62a is attached in such a manner that an edge of edged tool 62a faces electric wire 43d constituting transition wire 12b. On a back surface of edged tool 62a, there is attached coil spring 61b on a central part of the back, in a collapsed state. Both ends of the edge of edged tool 62a are held by hot-melting resin 66. In this state, hot-melting resin 66 is located between the edge and an inner wall of wire break facilitator 40f and acts to hold elastomeric force of coil spring 61b. In the present exemplary embodiment, polyacetal is used as hot-melting resin 66.

Next a description will be given on wire break facilitator 40f when an ambient temperature of wire break facilitator 40f has reached a predetermined temperature.

As shown in FIG. 25, when the ambient temperature in wire break facilitator 40f has reached the predetermined temperature, polyacetal, which is hot-melting resin 66, melts. Thus, edged tool 62a having lost the support moves by released elastomeric force of coil spring 61b in such a direction to press electric wire 43d constituting transition wire 12b against the inner wall of wire break facilitator 40f. Therefore, edged tool 62a deforms transition wire 12b. Alternatively, coil spring 61b is so adjusted that edged tool 62a cuts transition wire 12b.

In the present exemplary embodiment, since polyacetal is used as hot-melting resin 66, the above-mentioned predetermined temperature is expected to be higher than or equal to 181°C, which is the melting point of polyacetal. In other words, hot-melting resin 66 having a desired melting point can be used to adjust the above-mentioned predetermined temperature.

Other than the above, resin-molded stators were formed in the same manner as the stators in the first exemplary embodiment except that the inside of the wire break facilitator was modified, and then, electric motors were assembled. The assembled electric motors were used to conduct the same burning test. In the burning test, the following conductor diameters were used: 0.2 mm (Invention sample 18), 0.4 mm (Invention sample 19), 0.6 mm (Invention sample 20), and 0.8 mm (Invention sample 21). The results of the test are shown in Table 7.

**[Table 7]**

| Sample | Invention sample 18 | Invention sample 19 | Invention sample 20 | Invention sample 21 |
|---|---|---|---|---|
| Conductor diameter | 0.2 mm | 0.4 mm | 0.6 mm | 0.8 mm |
| Highest achieved temperature | 190°C | 190°C | 200°C | 220°C |
| Result | Wire broken | Wire broken | Wire broken | Wire broken |

The samples whose wires were broken were broken down to examine the place where the wire was broken. As a result, it was confirmed that for all of the samples, electric wire 43d was cut inside wire break facilitator 40f on at least one part with which edged tool 62a came into contact.

The above results show that if wire break facilitator 40f is configured by using such a member that melts at a predetermined temperature like hot-melting resin 66, electric wire 43d, which is transition wire 12b located inside wire break facilitator 40f, can be deformed or cut at about the predetermined temperature. The present configuration is an effective way particularly when electric wire 43d having a large conductor diameter is used. In addition, when electric motor 1 is normally operating, the characteristics of electric motor 1 are not affected at all. As a result, the reliability of electric motor 1 can be maintained.

Note that in the present configuration, shape-memory alloy may be used as a material for coil spring 61b.

As described above, wire break facilitator 40f of the present exemplary embodiment includes: deforming unit 62 that deforms electric wire 43d; and holder 61 that holds deforming unit 62 and is formed of a member that melts into a liquid state at a temperature higher than the higher temperature of the molding temperature of the resin and the maximum achieving coil temperature when the electric motor is operating. When holder 61 has melted into a liquid state, deforming unit 62 moves in a predetermined movable range.

### (Eighth exemplary embodiment)

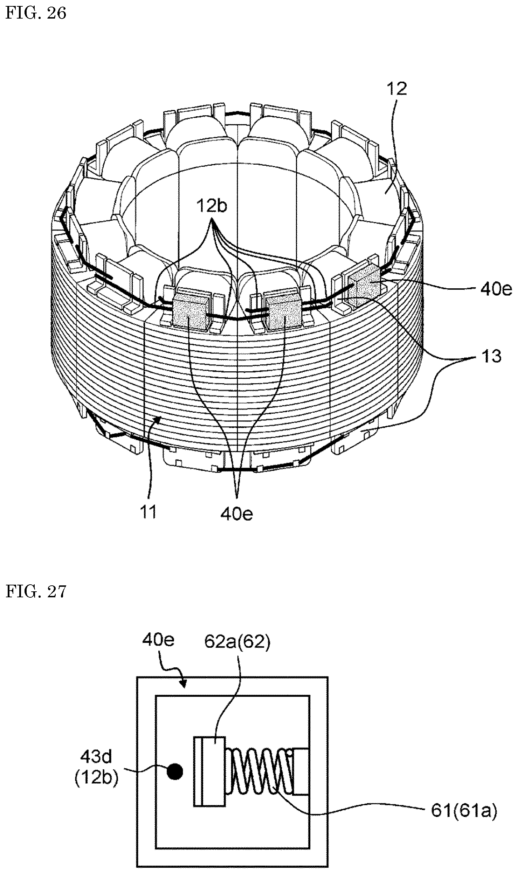

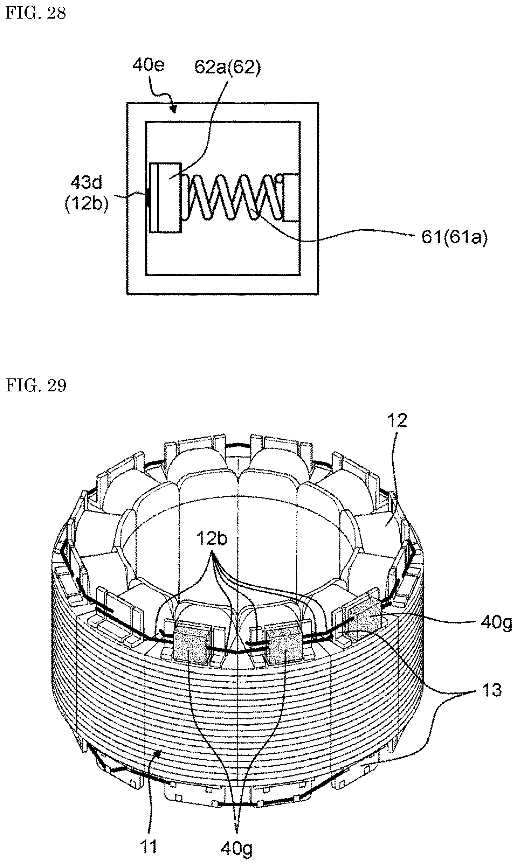

FIG. 26 is a perspective view showing a stator of an electric motor according to an eighth exemplary embodiment of the present invention before the stator is resin-molded. FIG. 27 is an explanatory diagram of a holder included in wire break facilitator 40e used in the electric motor before the holder operates. FIG. 28 is an explanatory diagram of the holder included in wire break facilitator 40e used in the electric motor after the holder operates.

As shown in FIGS. 26 to 28, wire break facilitator 40e used in the electric motor according to the eighth exemplary embodiment includes: edged tool 62a, which is deforming unit 62 that deforms electric wire 43d constituting transition wire 12b; and coil spring 61a, which is holder 61.

Coil spring 61a, which is holder 61, holds deforming unit 62. The coil spring 61a is formed of a shape-memory alloy whose shape changes at a temperature higher than the higher temperature of the molding temperature of the resin and the maximum achieving coil temperature at the time of operation.

In particular, the temperature at which the member of wire break facilitator 40e melts into a liquid state or a gas is preferably 20°C or more higher than the higher temperature of the molding temperature of the resin and the maximum achieving coil temperature when the electric motor is operating.

When the shape of coil spring 61a, which is holder 61, has changed in wire break facilitator 40e, edged tool 62a, which is deforming unit 62, moves in a predetermined movable range.

A specific example will be described in detail with reference to the drawings. Note that the components similar to the already described components are assigned the same reference marks, and the corresponding descriptions are used.

First, the difference between the electric motor according to the eighth exemplary embodiment and the electric motor according to the first exemplary embodiment is in the wire break facilitator. In the electric motor according to the eighth exemplary embodiment, the internal dimensions of wire break facilitator 40e made of PBT are changed to 10 mm × 5 mm × 5 mm.

Further, as shown in FIG. 27, wire break facilitator 40e contains: stainless-steel edged tool 62a, which is deforming unit 62; and coil spring 61a, which is holder 61 and is formed of shape-memory alloy.

Coil spring 61a is made of Ti-Ni-(Zr, Hf)-Nb alloy and is made of shape-memory alloy in a wire shape having a diameter of 0.5 mm. The outer periphery of coil spring 61a has a diameter of 3 mm. On one end of coil spring 61a, there is attached stainless-steel edged tool 62a. Edged tool 62a and coil spring 61a in a collapsed state are assembled inside wire break facilitator 40e.

At temperatures less than or equal to 210°C, coil spring 61a is collapsed inside wire break facilitator 40e, and electric wire 43d constituting transition wire 12b and electric edged tool 62a are not in contact with each other. In this state, a length of coil spring 61a is 3 mm.

On the other hand, the temperature has risen higher than 210°C, coil spring 61a comes in a stretched state inside wire break facilitator 40e, as shown in FIG. 28. In this state, coil spring 61a has stretched to be 7 mm. Therefore, electric wire 43d constituting transition wire 12b and edged tool 62a are in contact with each other. Edged tool 62a deforms electric wire 43d constituting transition wire 12b. Alternatively, coil spring 61a is so adjusted that edged tool 62a cuts electric wire 43d constituting transition wire 12b.

Other than the above, resin-molded stators were formed in the same manner as the stators in the first exemplary embodiment except that the dimensions of the wire break facilitator were modified and except that holder 61 and deforming unit 62 were assembled in wire break facilitator 40e, and electric motors were then assembled. The assembled electric motors were used to conduct the same burning test. In the burning test, the following conductor diameters were used: 0.2 mm (Invention sample 22), 0.4 mm (Invention sample 23), 0.6 mm (Invention sample 24), and 0.8 mm (Invention sample 25). The results of the test are shown in Table 8.

**[Table 8]**

| Sample | Invention sample 22 | Invention sample 23 | Invention sample 24 | Invention sample 25 |
|---|---|---|---|---|
| Conductor diameter | 0.2 mm | 0.4 mm | 0.6 mm | 0.8 mm |
| Highest achieved temperature | 210°C | 210°C | 230°C | 250°C |
| Result | Wire broken | Wire broken | Wire broken | Wire broken |

The samples whose wires were broken were broken down to examine the place where the wire was broken. As a result, it was confirmed that for all of the samples, electric wire 43d was cut inside wire break facilitator 40e on at least one part with which edged tool 62a came into contact.

The above results show that if the wire break facilitator is configured with a member formed of shape-memory alloy, it is possible to deform or cut the electric wire, which constitutes the transition wire and is located inside the wire break facilitator, at about a predetermined temperature. The present configuration is an effective way particularly when an electric wire having a large conductor diameter is used. In addition, when electric motor 1 is normally operating, the characteristics of electric motor 1 are not affected at all. As a result, the reliability of electric motor 1 can be maintained.

Further, in the above-mentioned seventh and eighth exemplary embodiments, coil springs 61a, 61b are respectively described as examples of a part of holder 61 attached in wire break facilitators 40e, 40f. Other constituent elements may be used as a member that provides similar actions and effects. Specifically, if an element operates such that the element deforms or cuts electric wire 43d, which is transition wire 12b, at a predetermined temperature, the internal structure of the wire break facilitator is not specifically limited.

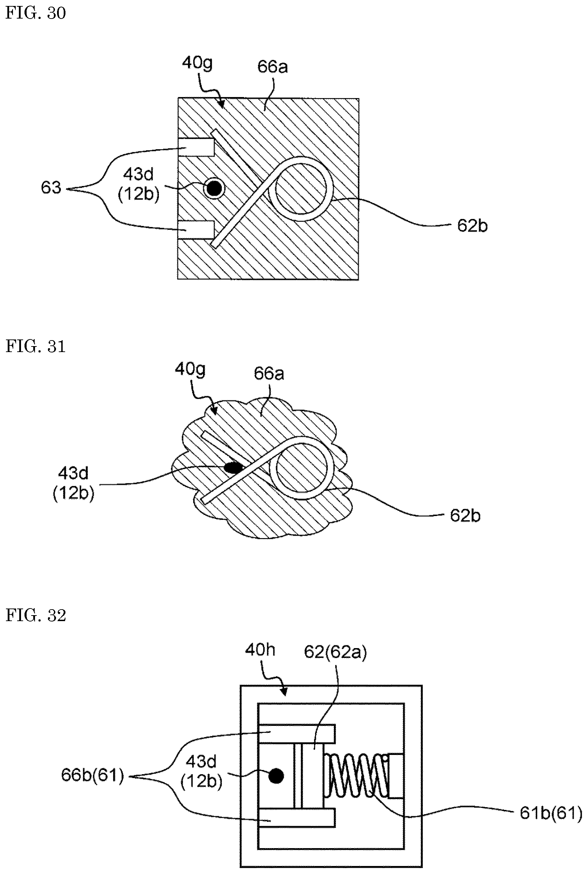

For example, as shown in FIGS. 29 to 31, the following configuration can be used. FIG. 29 is an explanatory diagram showing another stator of the electric motor according to the eighth exemplary embodiment of the present invention before the stator is resin-molded. FIG. 30 is an explanatory diagram of a holder included in another wire break facilitator 40g used in the electric motor before the holder operates. FIG. 31 is a perspective view of the holder included in the another wire break facilitator 40g used in the electric motor after the holder operates. Wire break facilitator 40g is realized by helical spring 62b serving as deforming unit 62 and by hot-melting resin 66a put in wire break facilitator 40g as holder 61.

Helical spring 62b has a biasing force to narrower a gap between both end parts of helical spring 62b. As hot-melting resin 66a, polyacetal or the like can be used. With reference to FIG. 30, a jig or a tool is inserted in holes 63, when wire break facilitator 40g is manufactured, where the jig or the tool is for hot-melting resin 66a to be solidified while keeping both the ends of helical spring 62b in an opened state at positions away from electric wire 43d, which is transition wire 12b.

As shown in FIG. 30, if the present configuration is used, hot-melting resin 66a is solidified at temperatures lower than a melting temperature of hot-melting resin 66a located inside wire break facilitator 40g, while both the ends of helical spring 62b are kept in an opened state at positions away from electric wire 43d, which is transition wire 12b.

On the other hand, as shown in FIG. 31, when a temperature inside wire break facilitator 40g has reached a predetermined temperature and exceeded the melting temperature of hot-melting resin 66a, hot-melting resin 66a melts. When the melting temperature of hot-melting resin 66a has been exceeded, hot-melting resin 66a melts, and helical spring 62b thus acts so as to nip electric wire 43d, which is transition wire 12b. Electric wire 43d is made thinner, is cut, or is deformed by being nipped by helical spring 62b. Wire break facilitator 40g using helical spring 62b prepared in the above manner as shown in FIGS. 30 and 31 can be used for the burning test in the same manner as the above-mentioned wire break facilitators.

Further, it is of course possible to previously reduce, by deformation or the like, the cross-sectional area of a part, of electric wire 43d, to be deformed or cut in wire break facilitator 40g.

FIG. 32 is an explanatory diagram of a holder included in still another wire break facilitator 40h used in the electric motor according to the eighth exemplary embodiment of the present invention before the holder operates. FIG. 33 is an explanatory diagram of the holder included in the still another wire break facilitator 40h used in the electric motor after the holder operates.

Instead of the above-mentioned wire break facilitator 40e, wire break facilitator 40h can be used as shown in FIGS. 32 and 33. Wire break facilitator 40h includes: edged tool 62a, which is deforming unit 62 that deforms electric wire 43d; and holder 61. Holder 61 is formed of hot-melting resin 66b together with coil spring 61b holding edged tool 62a, which is deforming unit 62. Hot-melting resin 66b is a member that melts into a gas at a temperature higher than the higher temperature of the molding temperature of the resin and the maximum achieving coil temperature at the time of operation.

In particular, the temperature at which the member of wire break facilitator 40h melts into a liquid state or a gas is preferably 20°C or more higher than the higher temperature of the molding temperature of the resin and the maximum achieving coil temperature when the electric motor is operating.

Wire break facilitator 40h may be configured such that when holder 61 has melted into a gas, edged tool 62a, which is deforming unit 62, moves in a predetermined movable range.

In the above-mentioned exemplary embodiment, a polyurethane-nylon copper wire is used as electric wire 43d; however, it is possible to use a wire that has a different coating layer or is made of another conductor material. PBT is used as insulator 13, and BMC is used as molding resin 31; however, other materials may be used. In the above exemplary embodiment, a description is given to the case where wire break facilitators 40 are provided on transition wires 12b between coils 12 or connection parts 15a of lead wires 15; however, the present exemplary embodiment is not limited to this configuration, and wire break facilitators 40 may be provided on connection part 14a at neutral point 14 at which the three phases of U-phase, V-phase, and W-phase are connected to each other.

As described above, wire break facilitator 40h of the present exemplary embodiment includes: deforming unit 62 that deforms the electric wire; and holder 61 that holds deforming unit 62 and is formed of a member that melts into a gas at a temperature higher than the higher temperature of the molding temperature of the resin and the maximum achieving coil temperature when the electric motor is operating. When holder 61 has melted into a gas, deforming unit 62 moves in a predetermined movable range.

Alternatively, wire break facilitator 40e includes: deforming unit 62 that deforms the electric wire; and holder 61 that holds deforming unit 62 and is formed of shape-memory alloy whose shape changes at a temperature higher than the higher temperature of the molding temperature of the resin and the maximum achieving coil temperature when the electric motor is operating. When the shape of holder 61 has changed, deforming unit 62 moves in a predetermined movable range.

### INDUSTRIAL APPLICABILITY

The present invention can be easily and widely used for an electric motor (molded motor) in which a stator is covered with molding resin.

### REFERENCE MARKS IN THE DRAWINGS

- 1:: electric motor
- 10:: stator
- 11:: stator core
- 12:: coil
- 12a:: coil end
- 12b:: transition wire
- 12c, 43a, 43b, 43c, 43d, 44a, 44b, 44c:: electric wire
- 13:: insulator
- 13a:: bottom surface part
- 13b:: outer peripheral wall
- 13c:: inner peripheral wall
- 14:: neutral point
- 14a, 15a:: connection part
- 15:: lead wire
- 20:: rotor
- 21:: rotary shaft
- 22:: rotary body
- 23:: rotor core
- 24:: magnet
- 30A, 30B:: shaft bearing
- 31:: molding resin
- 31a:: barrel
- 31b:: coil mold
- 32:: first metal case
- 33:: second metal case
- 34:: circuit board
- 40, 40a, 40b, 40c, 40d, 40e, 40f, 40g, 40h, 40j, 40k:: wire break facilitator
- 41, 41a, 41b, 41c, 41d:: enclosure member
- 42:: line break facilitating body
- 45:: flattened part
- 46:: part deformed in a recessed shape
- 47, 47a:: resistor
- 51:: connection terminal
- 52:: thin electric wire
- 53:: coil wire
- 55a:: connecting part
- 55b:: connection terminal
- 61:: holder
- 61a, 61b:: coil spring
- 62:: deforming unit
- 62a:: edged tool
- 62b:: helical spring
- 63:: hole
- 66, 66a, 66b:: hot-melting resin
- 90:: power supply

## Claims

1. An electric motor, comprising:
a stator including: a stator core; and coils that are formed of an electric wire wound on the stator core and form a plurality of phases;
a resin covering the stator; and
a wire break facilitator that facilitates the electric wire to break,
wherein the wire break facilitator is attached to at least one of: a transition wire part between the coils wound on the stator core; a connection part at a neutral point of the plurality of phases formed by the coils; and a connection part between the electric wire and a lead wire that supplies electric power to the electric wire from outside.

2. The electric motor according to claim 1, wherein the wire break facilitator is a space containing air.

3. The electric motor according to claim 1, wherein the wire break facilitator is formed of a member that melts into a liquid state at a temperature higher than a higher temperature of a molding temperature of the resin and a maximum achieving coil temperature when the electric motor is operating.

4. The electric motor according to claim 3, wherein the member that melts into a liquid state is made of at least any one of nylon 6, polybutylene terephthalate, polyvinyl alcohol, polyvinyl chloride, polyvinylidene chloride, polyacetal, nylon 12, polymethyl methacrylate, polyethylene terephthalate, polyvinylidene fluoride, nylon 66, polyphenylene sulfide, polyetherimide, polysulfone, acetyl cellulose, and ethyl cellulose.

5. The electric motor according to claim 1, wherein the wire break facilitator is formed of a member that melts into a gas at a temperature higher than a higher temperature of a molding temperature of the resin and a maximum achieving coil temperature when the electric motor is operating.

6. The electric motor according to claim 1, wherein a part, of the electric wire, located inside the wire break facilitator has a smaller cross-sectional area than a part, of the electric wire, located outside the wire break facilitator.

7. The electric motor according to claim 6, wherein the part, of the electric wire, located inside the wire break facilitator has a part, of the electric wire, located inside the wire break facilitator and deformed in a flattened shape, and has a smaller cross-sectional area than the part, of the electric wire, located outside the wire break facilitator.

8. The electric motor according to claim 6, wherein the part, of the electric wire, located inside the wire break facilitator has a part, of the electric wire, located inside the wire break facilitator and deformed in a recessed shape, and has a smaller cross-sectional area than the part, of the electric wire, located outside the wire break facilitator.

9. The electric motor according to claim 6, wherein the part, of the electric wire, located inside the wire break facilitator is configured with an electric wire having a smaller wire diameter than the electric wire located outside the wire break facilitator.

10. The electric motor according to claim 1, wherein the wire break facilitator is a thermosensitive conductive member that breaks at a temperature higher than a higher temperature of a molding temperature of the resin and a maximum achieving coil temperature when the electric motor is operating.

11. The electric motor according to claim 1, wherein the wire break facilitator includes:
a thermosensitive conductive member that breaks at a temperature higher than a higher temperature of a molding temperature of the resin and a maximum achieving coil temperature when the electric motor is operating; and
an enclosure member that encloses the thermosensitive conductive member in such a manner that the enclosure member forms a space on a periphery of the thermosensitive conductive member.

12. The electric motor according to any one of claims 10 and 11, wherein the thermosensitive conductive member is a resistor.

13. The electric motor according to claim 1, wherein the wire break facilitator includes:
a deforming unit that deforms the electric wire; and
a holder that holds the deforming unit and is formed of a member that melts into a liquid state at a temperature higher than a higher temperature of a molding temperature of the resin and a maximum achieving coil temperature when the electric motor is operating,
wherein when the holder has melted into a liquid state, the deforming unit moves in a predetermined movable range.

14. The electric motor according to claim 1, wherein the wire break facilitator includes:
a deforming unit that deforms the electric wire; and
a holder that holds the deforming unit and is formed of a member that melts into a gas at a temperature higher than a higher temperature of a molding temperature of the resin and a maximum achieving coil temperature when the electric motor is operating,
wherein when the holder has melted into a gas, the deforming unit moves in a predetermined movable range.

15. The electric motor according to claim 1, wherein the wire break facilitator includes:
a deforming unit that deforms the electric wire; and
a holder that holds the deforming unit and is formed of shape-memory alloy whose shape changes at a temperature higher than a higher temperature of a molding temperature of the resin and a maximum achieving coil temperature when the electric motor is operating,
wherein when a shape of the holder has changed, the deforming unit moves in a predetermined movable range.

16. A method for manufacturing an electric motor including:
a stator including: a stator core; and coils that are formed of an electric wire wound on the stator core and form a plurality of phases;
a resin covering the stator; and
a wire break facilitator that facilitates the electric wire to break,
wherein the wire break facilitator is attached to at least one of: a transition wire part between the coils wound on the stator core; a connection part at a neutral point of the plurality of phases formed by the coils; and a connection part between the electric wire and a lead wire that supplies electric power to the electric wire from outside, and
a part, of the electric wire, located inside the wire break facilitator has a smaller cross-sectional area than a part, of the electric wire, located outside the wire break facilitator, the method comprising
forming the part, of the electric wire, inside the wire break facilitator by stretching the part, of the electric wire, inside the wire break facilitator.

17. A method for manufacturing an electric motor including:
a stator including: a stator core; and coils that are formed of an electric wire wound on the stator core and form a plurality of phases;
a resin covering the stator; and
a wire break facilitator that facilitates the electric wire to break,
wherein the wire break facilitator is attached to at least one of: a transition wire part between the coils wound on the stator core; a connection part at a neutral point of the plurality of phases formed by the coils; and a connection part between the electric wire and a lead wire that supplies electric power to the electric wire from outside, and
a part, of the electric wire, located inside the wire break facilitator has a smaller cross-sectional area than a part, of the electric wire, located outside the wire break facilitator, the method comprising
forming the part, of the electric wire, inside the wire break facilitator by twisting the part, of the electric wire, inside the wire break facilitator.

18. A method for manufacturing an electric motor including:
a stator including: a stator core; and coils that are formed of an electric wire wound on the stator core and form a plurality of phases;
a resin covering the stator; and
a wire break facilitator that facilitates the electric wire to break,
wherein the wire break facilitator is attached to at least one of: a transition wire part between the coils wound on the stator core; a connection part at a neutral point of the plurality of phases formed by the coils; and a connection part between the electric wire and a lead wire that supplies electric power to the electric wire from outside, and
a part, of the electric wire, located inside the wire break facilitator has a smaller cross-sectional area than a part, of the electric wire, located outside the wire break facilitator, the method comprising
forming the part, of the electric wire, inside the wire break facilitator by bending the part, of the electric wire, inside the wire break facilitator.

19. The electric motor according to any one of claims 3, 5, 10, 11, 13, 14, and 15, wherein a temperature at which the member that melts into a liquid state melts into a liquid state is 20°C or more higher than the higher temperature of the molding temperature of the resin and the maximum achieving coil temperature during operation.

20. The electric motor according to claim 1, wherein a part, of the electric wire, located inside the wire break facilitator is twisted.

21. The electric motor according to claim 1, wherein a part, of the electric wire, located inside the wire break facilitator is bent.
